# EUROPÄISCHE PATENTSCHRIFT

(11) **EP 2 427 518 B1**
(45) Veröffentlichungstag und Bekanntmachung des Hinweises auf die Patenterteilung: **19.04.2017**
(21) Anmeldenummer: 10722026.1
(22) Anmeldetag: 03.05.2010
(51) Int. Cl.: C08L 77/02, C08L 77/06

(54) **REDUKTION DES EINFLUSSES DER WASSERAUFNAHME AUF DIE ELEKTRISCHE LEITFÄHIGKEIT VON ELEKTRISCH LEITFÄHIGEN POLYAMID-FORMMASSEN**
REDUCTION OF THE INFLUENCE OF WATER ABSORPTION ON THE ELECTRICAL CONDUCTIVITY OF ELECTRICALLY CONDUCTIVE POLYAMIDE MOLDING COMPOUNDS
RÉDUCTION DE L'INFLUENCE DE L'HYDROPHILIE SUR LA CONDUCTIBILITÉ ÉLECTRIQUE DE MATIÈRES MOULABLES ÉLECTRIQUEMENT CONDUCTRICES EN POLYAMIDE

(30) Priorität: 06.05.2009 DE 102009020090
(43) Veröffentlichungstag der Anmeldung: 14.03.2012
(73) Patentinhaber: LANXESS Deutschland GmbH, 50569 Köln (DE)
(72) Erfinder: BÜCHNER, Oliver, 40699 Erkrath (DE)
(86) Internationale Anmeldenummer: PCT/EP2010/055973
(87) Internationale Veröffentlichungsnummer: WO 2010/128013

(56) Entgegenhaltungen:
- EP-A1- 1 790 685
- WO-A1-00/46815
- WO-A1-2004/113437

## Beschreibung

Diese Erfindung betrifft elektrisch leitfähige Polyamid Formmassen mit von der Wasseraufnahme nahezu unabhängiger elektrischer Leitfähigkeit und guten mechanischen Eigenschaften, enthaltend wenigstens ein thermoplastisches Polyamid, ein Polymerisat des Propylens, einen Verträglichkeitsvermittler aus der Reihe der Pfropfcopolymerisate des Propylens und als Leitfähigkeitsadditiv Carbon Nanotubes.

Elektrisch leitfähige Kunststoffe zeichnen sich durch einen niedrigen Oberflächenwiderstand aus. Zwischen elektrischer Leitfähigkeit und elektrischem Widerstand besteht ein umgekehrt proportionaler Zusammenhang, d.h. bei hohen Leitfähigkeiten liegt eine niedriger Widerstand vor, bei niedrigen Leitfähigkeiten liegt ein hoher Widerstand vor.

Elektrische leitfähige Kunststoffe werden für eine Vielzahl von Anwendungen benötigt, wobei heute folgende Anwendungen im Vordergrund stehen:
- Verhinderung von antistatischer Aufladung z.B. bei Verpackungen, bei Dosiersystemen für Aerosole, Pulver oder Flüssigkeiten und z.B. bei Elektronikbauteilen wie Chip-Trägern, wo aus Sicherheitsgründen die elektrostatische Aufladung verhindert werden muss.
- Elektromagnetische Abschirmung von elektrischen Geräten und elektronischen Baugruppen, z.B. in der Kfz-, EDV-, Nachrichten- und Kommunikationstechnik.
- Nutzung der elektrochemischen Reversibilität der selbstleitenden Kunststoffe z.B. für Polymerbatterien oder Elektroden.
- Nutzung der elektrischen Leitfähigkeit, z.B. Potentialsteuerung im Kabel, stromabhängige Schaltelemente, Heizelemente oder für die elektrostatische Lackierung von Kunststoffteilen. Die elektrostatische Lackierung hat sich in den letzten Jahren in sehr vielen Bereichen, insbesondere in der Kfz-Industrie, durchgesetzt. Grundvoraussetzung der elektrostatischen Lackierung ist die Möglichkeit elektrische Ladungen auf die zu lackierenden Formteile aufbringen zu können. Dies ist bei Metallen leicht, bei üblichen Thermoplasten wegen deren geringer Leitfähigkeit aber normalerweise nicht in ausreichendem Maße möglich.

Bei vielen dieser genannten Anwendungen wie insbesondere z.B. zur Verhinderung der statischen Aufladung, der elektrostatischen Lackierung oder elektromagnetischen Abschirmung kann die geforderte Oberflächenleitfähigkeit durch Aufbringen einer leitfähigen Schicht hergestellt werden, wie z.B. durch Metallisierung, Aufdampfen von Metall, Lackierung oder Primern mit einem leitfähigen Lack bzw. Primer. Die Applikation der leitfähigen Oberfläche ist jedoch arbeits- und kostenaufwändig, bietet zusätzliche Fehlerquellen und ist nicht für alle Geometrien problemlos anwendbar, so dass ein starkes Bedürfnis nach leitfähigen Kunststoffen besteht, die alternativ zu diesen Oberflächenveredelungen eingesetzt werden können.

Bei der elektrostatischen Lackierung im Kfz-Bereich wird beispielsweise durch Einsatz von sogenannten Primern mit Leitfähigkeitsadditiven, die vor der elektrostatischen Lackierung auf die Kunststoffformteile appliziert werden, die notwendige Leitfähigkeit hergestellt. Die dabei entstehende leitfähige Schicht vermittelt gleichzeitig die Haftung vom Kunststoff zum Lack. Auch hier sind Prozessvereinfachung und Prozessverkürzung, Verminderung von Fehlerquellen und Kosteneinsparung durch Einsparung des elektrostatischen Primers die Hauptgründe für die Nachfrage nach elektrisch leitfähigen Kunststoffen.

Zur Herstellung leitfähiger Thermoplaste werden üblicherweise leitfähige Substanzen wie z.B. Ruß, Kohlenstofffasern, Carbon Nanotubes, Graphit, Metallfasern und Metallpulver, metallisierte Glasfasern oder leitfähige Polymere mit konjugiertem Elektronensystem wie beispielsweise Polyanilin, Poly-*para*-phenylenvinylen oder Polythiophen eingesetzt.

Neben der Leitfähigkeit werden insbesondere bei Anwendungen im Kfz-Bereich auch hohe Anforderungen wie z.B. hinsichtlich erstklassiger Oberflächenqualität, hohe Zähigkeit, geringe Dichte, hohe Fließfähigkeit und geringer Preis an die Thermoplaste gestellt. Als Leitfähigkeitsadditiv wird für Thermoplaste häufig Kohlenstoff in verschiedenen Modifikationen wie zum Beispiel Ruß, Kohlenstofffasern, Graphit, Nanographit oder Carbon Nanotubes eingesetzt.

Die Eigenschaften aliphatischer Polyamide werden deutlich durch die Aufnahme von Wasser beeinflusst. Das Wasser führt zu einer Abnahme von Steifigkeit und Festigkeit, während die Zähigkeit erhöht wird.

In elektrisch isolierenden Polyamid-Formmassen führt die Wasseraufnahme zu einer Absenkung des Oberflächenwiderstands, d.h. die elektrische Leitfähigkeit nimmt zu. Jedoch liegt der Oberflächenwiderstand insgesamt immer noch auf einem sehr hohen Niveau, welches den Einsatz in den vorgenannten Anwendungen verhindert.

Wird in Polyamiden eine elektrische Leitfähigkeit mit Hilfe von Leitfähigkeitsadditiven eingestellt, so führt die Wasseraufnahme in der Regel zu einer Zunahme des elektrischen Widerstands, d.h zu einer Abnahme der elektrischen Leitfähigkeit. Da Leitfähigkeitsadditive in der Regel mit hohen Kosten verbunden sind und wegen der hohen benötigten Konzentration - insbesondere bei Rußen oder Leitrußen - häufig zur Verschlechterung der Oberflächenqualität, der Zähigkeit (z.B. durch beschleunigte Kristallisation bei teilkristallinen Thermoplasten) und der Fließfähigkeit (z.B. durch Thixotropie) führen, wird nur die gerade eben für einen bestimmten Oberflächenwiderstand nötige Menge an Leitfähigkeitsadditiv eingesetzt. Durch die Wasseraufnahme über die Lebensdauer eines Polyamid Formteils kann es daher zu einem unerwünschten Ansteigen des Oberflächenwiderstands und damit einem Absinken der elektrischen Leitfähigkeit kommen.

Es ist bekannt, dass die Wasseraufnahme von Polyamiden durch Blenden mit Polypropylen reduziert werden kann (Kunststoff-Handbuch, Bd. 3/4 Polyamide, S. 142-147, Carl Hanser Verlag, München, 1998). Dabei wird die Wasseraufnahme grob um den Anteil reduziert, wie Polyamid durch Polypropylen ersetzt wird. Daher lässt sich die Wasseraufnahme in einem Polyamid/Polypropylen Blend zwar reduzieren aber nicht komplett vermeiden. Über den Einfluss auf den Oberflächenwiderstand während der Wasseraufnahme bei elektrisch leitfähigen Polyamiden wird nicht berichtet.

Der Einsatz größerer Mengen Leitfähigkeitsadditiv, um die Leitfähigkeit unabhängiger von der Wasseraufnahme zu gestalten, ist aus den bereits genannten Kostengründen und dem negativen Einfluss auf die mechanischen und rheologischen Eigenschaften nicht zielführend.

JP 2008019372A beschreibt mit dem Ziel eine bessere Produktivität bei der Leitrussdosierung zu erzielen, eine leitfähige Zusammensetzung aus Polyamid, Polypropylen, Kompatibilisator und Leitruß. In den offenbarten Zusammensetzungen werden jedoch erhebliche Mengen an Ruß bzw. Leitruß eingesetzt, um eine bestimmte Leitfähigkeit zu erzielen. Die hohen Russmengen wiederum beeinflussen maßgeblich das Erstarrungsverhalten der Formmassen und führen zu verminderter Fließfähigkeit und schlechterer Oberflächenqualität. Zusätzlich wirken sich die eingesetzten Russmengen negativ auf die mechanischen Eigenschaften aus. Der Einfluss der Wasseraufnahme auf die Leitfähigkeit der beschriebenen Formmassen wurde nicht untersucht.

US 20070203282A1 beschreibt eine Zusammensetzung bestehend aus einer Polyamidmatrix mit mindestens 2% Leitfähigkeitsadditiv und mindestens 1% Antistatika. Zusätzlich kann die Zusammensetzung auch noch Modifier (u.a. Polypropylen) enthalten. Der Einfluss der Wasseraufnahme auf die Leitfähigkeit wurde nicht untersucht.

WO 2000046815A1 beschreibt eine elektrisch leitfähige Zusammensetzung bestehend aus einer Mischung zweier Thermoplasten mit unterschiedlicher Polarität, Fasern bzw. Füllstoff und Ruß, wobei das erste Polymer eine kontinuierliche Matrix bildet. Die Fasern sind vom zweiten Polymer, welches eine höhere Polarität als das erste Polymer aufweist, umgeben und bilden ein Netzwerk in der durch das erste Polymer gebildeten kontinuierlichen Matrix. Der Leitruß befindet sich bevorzugt der durch das erste Polymer gebildeten kontinuierlichen Matrix. Der Leitruß befindet sich bevorzugt im Polymer mit der höheren Polarität und führt zu einer elektrischen Leitfähigkeit des ausgebildeten Netzwerks aus Fasern und umgebendem Polymer mit höherer Polarität. In den Beispielen werden u.a. Leitruß enthaltende, verstärkte Polypropylen Formmassen beschrieben, denen Polyamide zugesetzt werden. Aufgrund des hohen Polypropylenanteils und der durch die unterschiedliche Polarität bedingten Inkompatibilität zum Polyamid weisen diese Polypropylenformmassen nur mittelmäßige mechanische Eigenschaften auf. Weiterhin besitzen die beschriebenen Polypropylenformmassen eine unzureichende Wärmeformbeständigkeit bei hohen Temperaturen. Auch für die Verwendung bei hohen Dauergebrauchstemperaturen und im Kontakt mit Ölen oder Kraftstoffen sind diese Polypropylenformmassen nicht geeignet. Der Einfluss der Wasseraufnahme auf die Leitfähigkeit wurde nicht untersucht.

Schließlich offenbart WO2014/113437A1 Zusammensetzungen beinhaltend 5-80 Gew.-% eines Polyolefins, 10-85 Gew.-% eines Füllers, welche unter Anderen Carbonfasern sein können, und 10-85 Gew.-% eines thermoplastisches Materials.

Die Aufgabe der vorliegenden Erfindung bestand deshalb darin, eine Polyamid-Formmasse mit guten mechanischen Eigenschaften und niedrigem elektrischen Oberflächenwiderstand herzustellen, der sich bei Wasseraufnahme kaum ändert.

Kaum eine Änderung des Oberflächenwiderstands bei der Wasseraufnahme im Sinne der vorliegenden Erfindung bedeutet eine Änderung zwischen 0 und 100.000 Ohm, bevorzugt zwischen 0 und 10,000 Ohm, besonders bevorzugt zwischen 0 und 1000 Ohm, ganz besonders bevorzugt zwischen 0 und 100 Ohm.

Ein niedriger Oberflächenwiderstand im Sinne der vorliegenden Erfindung bedeutet ein Oberflächenwiderstand von kleiner als 10¹⁰ Ohm, bevorzugt kleiner 10⁶ Ohm, besonders bevorzugt kleiner 10³ Ohm.

Gute mechanische Eigenschaften im Sinne der vorliegenden Erfindung bedeutet eine gegenüber dem oben zitierten Stand der Technik um mindestens 5%, bevorzugt um mindestens 10%, besonders bevorzugt um mindestens 15% erhöhte Zugfestigkeit.

Es wurde nun überraschend gefunden, dass eine Polyamid Formmasse enthaltend wenigstens
A) 20-94,9 Gew.-% eines thermoplastischen Polyamids,
B) 2-40 Gew.-% wenigstens eines Polymerisats des Propylens,
C) 0,1 - 10 Gew.-% wenigstens eines Verträglichkeitsvermittlers aus der Reihe der Propfcopolymerisate des Propylens und
D) 0,01 - 30 Gew.-% Carbon Nanotubes
kaum eine Änderung des Oberflächenwiderstands bei Wasseraufnahme, einen niedrigen Oberflächenwiderstand und gute mechanische Eigenschaften aufweist.

Gegenstand der vorliegenden Anmeldung sind deshalb Polyamid Formmassen enthaltend wenigstens
A) 20-94,9 Gew.-% eines thermoplastischen Polyamids
B) 2-40 Gew.-% wenigstens eines Polymerisats des Propylens,
C) 0,1-10 Gew.-% wenigstens eines Verträglichkeitsvermittlers aus der Reihe der Pfropfcopolymerisate des Propylens und
D) 0,01-30 Gew.-% Carbon Nanotubes.

In einer bevorzugten Ausführungsform wird die Komponente A) zu 30-80 Gew.-%, besonders bevorzugt 45-70 Gew.-% eingesetzt.

Die erfindungsgemäß einzusetzenden Polyamide können nach verschiedenen Verfahren hergestellt und aus sehr unterschiedlichen Bausteinen synthetisiert werden und im speziellen Anwendungsfall allein oder in Kombination mit Verarbeitungshilfsmitteln, Stabilisatoren, polymeren Legierungs-partnern (z.B. Elastomeren) oder auch Verstärkungsmaterialien (wie z.B. mineralischen Füllstoffen oder Glasfasern) zu Werkstoffen mit speziell eingestellten Eigenschaftskombinationen ausgerüstet werden. Geeignet sind auch Blends mit Anteilen von anderen Polymeren, z.B. von Polyethylen, ABS (Acrylnitril-Butadien-Styrol-Copolymer), wobei ggf. ein oder mehrere Kompatibilisatoren eingesetzt werden können. Die Eigenschaften der Polyamide lassen sich durch Zusatz von Elastomeren verbessern, z. B. im Hinblick auf die Schlagzähigkeit von z. B. verstärkten Polyamiden. Die Vielzahl der Kombinationsmöglichkeiten ermöglicht eine sehr große Zahl von Produkten mit unterschiedlichsten Eigenschaften.

Zur Herstellung von Polyamiden sind eine Vielzahl von Verfahrensweisen bekannt geworden, wobei je nach gewünschtem Endprodukt unterschiedliche Monomerbausteine, verschiedene Kettenregler zur Einstellung eines angestrebten Molekulargewichtes oder auch Monomere mit reaktiven Gruppen für später beabsichtigte Nachbehandlungen eingesetzt werden.

Die technisch relevanten Verfahren zur Herstellung von Polyamiden laufen meist über die Polykondensation in der Schmelze. In diesem Rahmen wird auch die hydrolytische Polymerisation von Lactamen als Polykondensation verstanden.

Erfindungsgemäß bevorzugt als Komponente A) einzusetzende Polyamide sind teilkristalline Polyamide, besonders bevorzugt teilkristalline, aliphatische Polyamide, die ausgehend von Diaminen und Dicarbonsäuren und/oder Lactamen mit wenigstens 5 Ringgliedern oder entsprechenden Aminosäuren hergestellt werden können.

Als Edukte kommen aliphatische und/oder aromatische Dicarbonsäuren wie Adipinsäure, 2,2,4- und 2,4,4-Trimethyladipinsäure, Azelainsäure, Sebazinsäure, Isophthalsäure, Terephthalsäure, aliphatische und/oder aromatische Diamine wie z.B. Tetramethylendiamin, Hexamethylendiamin, 1,9-Nonandiamin, 2,2,4- und 2,4,4-Trimethylhexamethylendiamin, die isomeren Diamino-dicyclohexylmethane, Diaminodicyclohexylpropane, Bis-aminomethyl-cyclohexan, Phenylendiamine, Xylylendiamine, Aminocarbonsäuren wie z.B. Aminocapronsäure, bzw. die entsprechenden Lactame in Betracht. Copolyamide aus mehreren der genannten Monomeren sind eingeschlossen.

Erfindungsgemäß besonders bevorzugt werden Caprolactame, ganz besonders bevorzugt ε-Caprolactam sowie die meisten auf PA6, PA66 und auf anderen aliphatischen und/oder aromatischen Polyamiden bzw. Copolyamiden basierenden Compounds, bei denen auf eine Polyamidgruppe in der Polymerkette 3 bis 11 Methylengruppen kommen, eingesetzt.

Die erfindungsgemäß als Komponente A) einzusetzenden Polyamide können auch im Gemisch mit anderen Polyamiden und/oder weiteren Polymeren eingesetzt werden.

In einer besonders bevorzugten Ausführungsform werden der Komponente A) Fließverbesserer hinzugefügt. Als Fließverbesserer dienen bevorzugt Copolymerisate, besonders bevorzugt statistische Copolymerisate aus mindestens einem Olefin, bevorzugt α-Olefin und mindestens einem Methacrylsäureester oder Acrylsäureester eines aliphatischen Alkohols mit 1 bis 4 Kohlenstoffen, wobei der MFI (Schmelzflussindex) des Copolymerisats 50 g / 10 min nicht unterschreitet und vorzugsweise zwischen 80 und 900 g/10 min liegt. In einer bevorzugten Ausführungsform besteht das Copolymerisat zu weniger als 4 Gew.-%, besonders bevorzugt zu weniger als 1,5 Gew.-% und ganz besonders bevorzugt zu 0 Gew.-% aus Monomerbausteinen, die weitere reaktive funktionelle Gruppen (ausgewählt aus der Gruppe umfassend Epoxide, Oxetane, Anhydride, Imide, Aziridine, Furane, Säuren, Amine, Oxazoline) enthalten.

Erfindungsgemäß geeignete Olefine, bevorzugt α-Olefine als Bestandteil der als Fließverbesserer einzusetzenden Copolymerisate weisen bevorzugt zwischen 2 und 10 Kohlenstoff-Atomen auf und können unsubstituiert oder mit einer oder mehreren aliphatischen, cycloaliphatischen oder aromatischen Gruppen substituiert sein.

Bevorzugte Olefine sind ausgewählt aus der Gruppe umfassend Ethen, Propen, 1-Buten, 1-Penten, 1-Hexen, 1-Octen, 3-Methyl-1-penten. Besonders bevorzugte Olefine sind Ethen und Propen, ganz besonders bevorzugt ist Ethen.

Ebenfalls geeignet sind Mischungen der beschriebenen Olefine.

In einer weiteren bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des als Fließverbesserer einzusetzenden Copolymerisates ausschließlich über die Olefine in das Copolymer eingebracht.

Der Gehalt des Olefins am als Fließverbesserer einzusetzenden Copolymerisat liegt zwischen 50 und 95 Gew.-%, bevorzugt zwischen 61 und 93 Gew.-%.

Das als Fließverbesserer einzusetzende Copolymerisat wird weiterhin definiert durch den zweiten Bestandteil neben dem Olefin. Als zweiter Bestandteil sind Alkylester der Acrylsäure oder Methacrylsäure geeignet, deren Alkylgruppe aus 1-4 Kohlenstoffatomen gebildet wird.

Bevorzugt kann die Alkylgruppe des Methacrylsäure- oder Acrylsäureesters ausgewählt sein aus der Gruppe umfassend Methyl, Ethyl, n-Propyl, i-Propyl, n-Butyl, s-Butyl, i-Butyl, t-Butyl. Bevorzugt ist die Alkylgruppe des Methacrylsäure- oder Acrylsäureesters ausgewählt aus der Gruppe umfassend Ethyl, n-Propyl, i-Propyl, n-Butyl, s-Butyl, i-Butyl, t-Butyl. Ganz besonders bevorzugt weist die Alkylgruppe des Methacrylsäure- oder Acrylsäureesters 4 Kohlenstoffatome auf und umfasst die Gruppe n-Butyl, s-Butyl, i-Butyl und t-Butyl. Insbesondere bevorzugt ist der Acrylsäure-n-butylester.

Erfindungsgemäß besonders bevorzugt sind als Fließverbesserer einzusetzende Copolymerisate, bei denen das Olefin mit Acrylsäurebutylester, insbesondere Acrylsäure-n-butylester copolymerisiert wird.

Ebenfalls geeignet sind Mischungen der beschriebenen Acrylsäure- oder Methacrylsäureester. Bevorzugt ist hierbei die Verwendung von mehr als 50 Gew.-%, besonders bevorzugt mehr als 90 Gew.-% und ganz besonders bevorzugt die Verwendung von 100 Gew.-% Acrylsäurebutylester bezogen auf die Gesamtmenge an Acrylsäure- und Methacrylsäurester im als Fließverbesserer einzusetzenden Copolymerisat.

In einer weiteren bevorzugten Ausführungsform werden die weiteren reaktiven funktionellen Gruppen (ausgewählt aus der Gruppe umfassend Epoxide, Oxetane, Anhydride, Imide, Aziridine, Furane, Säuren, Amine, Oxazoline) des als Fließverbesserer einzusetzenden Copolymerisates ausschließlich über die Acrylsäure- oder Methacrylsäurester in das als Fließverbesserer einzusetzende Copolymer eingebracht.

Der Gehalt der Acrylsäure- oder Methacrylsäureester am als Fließverbesserer einzusetzenden Copolymerisat liegt bevorzugt zwischen 5 und 50 Gew.-%, besonders bevorzugt zwischen 7 und 39 Gew.-%.

Als Fließverbesserer geeignete Copolymerisate zeichnen sich neben der Zusammensetzung durch das niedrige Molekulargewicht aus. Dementsprechend sind für die erfindungsgemäßen Formmassen nur Copolymerisate als Fließverbesserer geeignet, die einen MFI-Wert gemessen bei 190°C und einer Belastung von 2,16 kg von mindestens 50 g / 10 min, bevorzugt zwischen 80 und 900 g/ 10 min aufweisen.

In einer bevorzugen Ausführung der Erfindung wird das Polymerisat des Propylens B) zu 10-30 Gew.-%, besonders bevorzugt zu 15-25 Gew.-% eingesetzt.

Das Polymerisat des Propylens B) ist bevorzugt ein Propylenhomopolymeriat oder ein Propylencopolymerisat mit bis zu 25 Gew.-% einpolymerisierten weiteren C₂-C₁₀-Alk-1-enen oder ein sogenanntes Propylen-Blockcopolymerisat aus 1,0 bis 99 Gew.-%, insbesondere aus 30 bis 90 Gew.-% eines Propylenhomopolymerisats und aus 1,0 bis 99 Gew.-%, insbesondere aus 10 bis 70 Gew.-% eines Propylencopolymerisats mit 5 bis 70 Gew.-%, insbesondere mit 7 bis 50 Gew.-% einpolymerisierter weiterer C₂-C₁₀-Alk-1-ene.

Derartige Polymerisate des Propylens B) sind sowohl im Handel käuflich als auch nach bekannten Verfahren herstellbar.

Das zum Polymerisat des Propylens B) führende Verfahren kann in den üblichen, für die Polymerisation von Alk-1-enen verwendeten Reaktoren entweder absatzweise oder bevorzugt kontinuierlich u.a. in Lösung, als Suspensionspolymerisation oder als Gasphasenpolymerisation durchgeführt werden. Geeignete Rührreaktoren sind beispielsweise kontinuierlich betriebene Rührreaktoren, Schleifenreaktoren oder Wirbelbettreaktoren. Selbstverständlich kann die Reaktion auch in einer Reihe von mehreren, hintereinander geschaltenen Reaktoren durchgeführt werden. Bevorzugt erfolgt die Polymerisation in der Gasphase oder in einer Suspension (Massepolymerisation). Geeignete Gasphasenreaktoren sind hierbei Wirbelbettreaktoren sowie horizontal oder vertikal gerührte Pulverbettreaktoren. Insbesondere werden Pulverbettreaktoren eingesetzt, bei denen das Reaktionsbett durch vertikale Rührer in Bewegung gehalten werden. Das Reaktionsbett besteht im Allgemeinen aus dem Polymerisat, das im jeweiligen Reaktor produziert wird. Geeignete Suspensionsreaktoren sind u.a. Schleifenreaktoren.

Bevorzugt erfolgt die Polymerisation der erfindungsgemäß einzusetzenden Polymerisate des Propylens B) bei Temperaturen im Bereich von 30 bis 150°C, insbesondere von 40 bis 100°C, und Drücken im Bereich von 10 bis 100 bar, insbesondere von 15 bis 80 bar, in Gegenwart eines Ziegler-Natta-Katalysatorsystems enthaltend,
a) eine titanhaltige Feststoffkomponente, die mindestens eine halogenhaltige Magnesiumverbindung und einen Elektronendonor aufweist,
b) eine Aluminiumverbindung und
c) eine weitere Elektronendonorverbindung.

Eine bevorzugte titanhaltige Feststoffkomponente wird u. a. aus Titantetrachlorid, Diisobutylphthalat, Ethanol und Magnesiumdichlorid hergestellt. Ihre Zusammensetzung und Herstellung ist u.a. aus der EP-A 45975, der EP-A 45977 oder der EP-A 86473 bekannt.

Die titanhaltige Feststoffkomponente kann ferner neben den oben beschriebenen Komponenten auch einen Träger enthalten, beispielsweise ein anorganisches Oxid wie Kieselgel. Die daraus resultierenden Ziegler-Natta-Katalysatorsysteme sind u. a. aus der US-A 4857613 oder aus der US-A 5288824 bekannt.

Weiterhin können die erfindungsgemäß einzusetzenden Polymerisate des Propylens B) auch durch Polymerisation bei Temperaturen von -50 bis 300°C, insbesondere von 0 bis 150°C und Drücken von 0,5 bis 3000 bar, insbesondere von 1 bis 100 bar mit Hilfe von Metallocen-Katalysatorsystemen hergestellt werden. Diese können
i) gegebenenfalls einen anorganischen oder organischen Träger,
ii) mindestens einen Metallocenkomplex,
iii) mindestens eine metalloceniumionenbildende Verbindung und
iv) gegebenenfalls mindestens eine organische Metallverbindung eines Alkali- oder Erdalkalimetalls oder eines Metalls der III. Hauptgruppe des Periodensystems enthalten.

Derartige Metallocen-Katalysatorsysteme sind u.a. in der EP-A 692499, der EP-A 323716 oder der EP-A 790076 beschrieben.
insbesondere von 180 bis 240°C in einem geeigneten Mischer beispielsweise in einem Extruder unterworfen werden.

Das erfindungemäß einzusetzende Polymerisat des Propylens B) weist vorzugsweise einen MFI, bei 230°C und unter einem Gewicht von 2,16 kg, nach ISO 1133, von 0,5 bis 60 g/10min, insbesondere bevorzugt von 2 bis 25 g/10min, ganz besonders bevorzugt von 3 bis 10 g/10min auf.

Als Komponente C) werden bevorzugt 0,2-9 Gew.-%, besonders bevorzugt 1-8 Gew.-%, insbesondere bevorzugt 3-6 Gew.-% wenigstens eines Verträglichkeitvermittlers aus der Reihe der Pfropfcopolymerisate des Propylens eingesetzt.

Für die Pfropfcopolymerisate des Propylens kommen als reaktive Gruppen bevorzugt Säureanhydride, Carbonsäuren, Carbonsäurederivate, primäre und sekundäre Amine, Hydroxylverbindungen, Oxazoline und Epoxide sowie ionische Verbindungen ggf. auch Kombinationen dieser reatkiven Gruppen in Frage. Der Verträglichkeitsvermittler kann dabei vorgefertigt eingesetzt oder in situ hergestellt werden. Das Pfropfcopolymer lässt sich auf einfache Weise durch reaktive Extrusion des Basispolymers beispielsweise mit Maleinsäureanhydrid in situ erzeugen. Besonders bevorzugt ist der Einsatz eines Maleinsäureanhydrid gepfropften Propylenpolymerisats als Verträglichkeitsvermittler. Ganz besonders bevorzugt ist der Einsatz von Maleinsäureanhydrid gepfropftem Polypropylen. Bevorzugt wird ein Homo-Polypropylen als Pfropfgrundlage gewählt. Der Anteil an Maleinsäureanhydrid liegt bevorzugt zwischen 0,01 und 5 Gew.-%, besonders bevorzugt zwischen 0,1 und 3 Gew.-%, ganz besonders bevorzugt zwischen 0,5 und 1,5 Gew.-%. Entsprechende Verträglichkeitsvermittler sind sowohl im Handel u.a. unter den Handelsnamen Bondyram® 1001, Polybond® 3200 oder Exxelor® PO1020 kommerziell erhältlich als auch nach bekannten Verfahren herstellbar.

Der erfindungsgemäß einzusetzende Verträglichkeitsvermittler aus der Reihe der Pfropfcopolymerisate des Propylens weist vorzugsweise einen MFI, bei 190 °C unter einem Gewicht von 2,16 kg, nach ASTM D-1238 von 1 bis 300 g/10 min, besonders bevorzugt von 10 bis 200 g/10 min, ganz besonders bevorzugt von 80 bis 150 g/10 min auf.

Als Komponente D) werden bevorzugt 0,02 bis 28 Gew.-% Carbon Nanotubes eingesetzt.

Kohlenstofffasern werden synonym auch als Carbonfasern bezeichnet. Carbon Nanotubes werden synonym auch als Kohlenstoff-Nanofibrillen oder Kohlenstoffnanoröhrehen bezeichnet.

In einer weiteren bevorzugten Ausführung der Erfindung werden Carbon Nanotubes im Bereich 0,05 - 15 Gew.-%, besonders bevorzugt 0,1 - 5 Gew.-%, ganz besonders bevorzugt 0,2 - 3 Gew.% eingesetzt.

Bevorzugte Carbon Nanotubes haben typischerweise die Form von Röhren, die aus Graphit-Schichten gebildet werden. Die Graphitlagen sind in konzentrischer Art um die Zylinderachse angeordnet. Carbon Nanotubes haben ein Längen-zu-Durchmesserverhältnis von wenigstens 5, vorzugsweise von mindestens 100, besonders bevorzugt von mindestens 1000. Der Durchmesser der Nanotubes liegt typischerweise im Bereich von 0,003 bis 0,5 µm, vorzugsweise im Bereich von 0,005 bis 0,08 µm, besonders bevorzugt im Bereich von 0,006 bis 0,05 µm. Die Länge der Carbon Nanotubes beträgt typischerweise 0,5 bis 1000 µm, vorzugsweise 0,8 bis 100 µm, besonders bevorzugt 1 bis 10 µm. Die Carbon Nanotubes besitzen meist einen hohlen, zylinderförmigen Kern, um den die Graphitlagen formal gewickelt sind. Dieser Hohlraum hat typischerweise einen Durchmesser von 0,001 bis 0,1 µm, bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Die Carbon Nanotubes können dabei als Aggregate Nanotubes beträgt typischerweise 0,5 bis 1000 µm, vorzugsweise 0,8 bis 100 µm, besonders bevorzugt 1 bis 10 µm. Die Carbon Nanotubes besitzen meist einen hohlen, zylinderförmigen Kern, um den die Graphitlagen formal gewickelt sind. Dieser Hohlraum hat typischerweise einen Durchmesser von 0,001 bis 0,1 µm, bevorzugt einen Durchmesser von 0,008 bis 0,015 µm. In einer typischen Ausführungsform der Carbon Nanotubes besteht die Wand der Fibrille um den Hohlraum beispielsweise aus 8 Graphitlagen. Die Carbon Nanotubes können dabei als Aggregate von bis zu 1000 µm Durchmesser, vorzugsweise bis zu 500 µm Durchmesser aus mehreren Nanotubes vorliegen. Die Aggregate können die Form von Vogelnestern, von gekämmtem Garn oder von offenen Netzstrukturen besitzen.

Die Zugabe der Carbon Nanotubes kann vor, während oder nach der Polymerisation der Monomere zum Polyamid der Komponte A) erfolgen. Erfolgt die Zugabe der erfindungsgemäßen Carbon Nanotubes nach der Polymerisation, so erfolgt sie vorzugsweise durch Zugabe zur Thermoplastenschmelze in einem Extruder oder in einem Kneter.

Durch den Compoundiervorgang im Kneter oder Extruder können insbesondere die bereits beschriebenen Aggregate weitgehend oder sogar vollständig zerkleinert werden und die Carbon Nanotubes in der Thermoplastenmatrix dispergiert werden.

In einer bevorzugten Ausführungsform können die Carbon Nanotubes als hochkonzentrierte Masterbatche in Thermoplasten, die bevorzugt aus der Gruppe der als Komponente A) eingesetzten Polyamide gewählt werden, zudosiert werden. Die Konzentration der Carbon Nanotubes in den Masterbatchen liegt im Bereich von 5 bis 50, bevorzugt 8 bis 30, besonders bevorzugt im Bereich von 12 bis 22 Gew.-%. Die Herstellung von Masterbatchen ist beispielsweise in US-A 5643502 beschrieben. Durch den Einsatz von Masterbatchen kann insbesondere die Zerkleinerung der Aggregate verbessert werden. Die Carbon Nanotubes können bedingt durch die Verarbeitung zur Formmasse bzw. Formkörper in der Formmasse bzw. im Formkörper kürzere Längenverteilungen als ursprünglich eingesetzt aufweisen.

Carbon Nanotubes werden beispielsweise von der Fa. Bayer Material Science oder der Fa. Nanocyl unter den Handelsnamen Baytubes^{®} oder Nanocyl^{®} angeboten. Die Synthese der Kohlenstoff-Nanofibrillen erfolgt beispielsweise in einem Reaktor, der ein Kohlenstoff enthaltendes Gas und einen Metallkatalysator enthält, wie es z.B. in US-A 5643502 beschrieben wird.

In einer bevorzugten Ausführungsform der vorliegenden Erfindung können die erfindungsgemäßen Formmassen neben den Komponenten A) bis D) noch zusätzlich E) 0,1-70 Gew.-%, besonders bevorzugt 5-60 Gew.-%, ganz besonders bevorzugt 15-50 Gew.-%, wenigstens eines Füll- oder Verstärkungsstoffes enthalten.

Als Füllstoff oder Verstärkungsstoff können aber auch Mischungen aus zwei oder mehr unterschiedlichen Füllstoffen und/oder Verstärkungsstoffen eingesetzt werden. Bevorzugte Füll- und/oder Verstärkungsstoffe sind Talk, Glimmer, Silikat, Quarz, Titandioxid, Wollastonit, Kaolin, amorphe Kieselsäuren, Magnesiumcarbonat, Kreide, Feldspat, Bariumsulfat, Glaskugeln und/oder faserförmige Füllstoffe und/oder Verstärkungsstoffen auf der Basis von Glasfasern. Besonders bevorzugt werden mineralische teilchenförmige Füllstoffe auf der Basis von Talk, Glimmer, Silikat, Quarz, Titandioxid, Wollastonit, Kaolin, amorphe Kieselsäuren, Magnesiumcarbonat, Kreide, Feldspat, Bariumsulfat und/oder Glasfasern eingesetzt. Insbesondere bevorzugt werden mineralische teilchenförmige Füllstoffe auf der Basis von Talk, Wollastonit, Kaolin und/oder Glasfasern eingesetzt. Insbesondere ganz besonders bevorzugt werden Glasfasern eingesetzt.

Insbesondere für Anwendungen, in denen Isotropie bei der Dimensionsstabilität und eine hohe thermische Dimensionsstabilität gefordert wird, wie beispielsweise in Kraftfahrzeug-Anwendungen für Karosserieaußenteile, werden bevorzugt mineralische Füllstoffe eingesetzt, insbesondere Talk, Wollastonit oder Kaolin.

Besonders bevorzugt werden ferner auch nadelförmige mineralische Füllstoffe eingesetzt. Unter nadelförmigen mineralischen Füllstoffen wird erfindungsgemäß ein mineralischer Füllstoff mit stark ausgeprägtem nadelförmigen Charakter verstanden. Insbesondere sei nadelförmiger Wollastonit genannt. Bevorzugt weist das Mineral ein Länge: Durchmesser - Verhältnis von 2:1 bis 35:1, besonders bevorzugt von 3:1 bis 19:1, insbesondere bevorzugt von 4:1 bis 12:1 auf. Die mittlere Teilchengröße der erfindungsgemäßen nadelförmigen Mineralien liegt bevorzugt bei kleiner 20 µm, besonders bevorzugt bei kleiner 15 µm, insbesondere bevorzugt bei kleiner 10 µm, bestimmt mit einem CILAS GRANULOMETER.

Der Füllstoff und/oder Verstärkungsstoff kann gegebenenfalls oberflächenmodifiziert sein, bevorzugt mit einem Haftvermittler bzw. Haftvermittlersystem insbesondere auf Silanbasis. Die Vorbehandlung ist jedoch nicht unbedingt erforderlich. Insbesondere bei Verwendung von Glasfasern können zusätzlich zu Silanen auch Polymerdispersionen, Filmbildner, Verzweiger und/oder Glasfaserverarbeitungshilfsmittel verwendet werden.

Die erfindungsgemäß insbesondere ganz besonders bevorzugt einzusetzenden Glasfasern, die im Allgemeinen einen Faserdurchmesser zwischen 7 und 18 µm, bevorzugt zwischen 9 und 15 µm haben, werden als Endlosfasern oder als geschnittene oder gemahlene Glasfasern zugesetzt. Die Fasern können mit einem geeigneten Schlichtesystem und einem Haftvermittler bzw. Haftvermittlersystem, bevorzugt auf Silanbasis, ausgerüstet sein.

Haftvermittler auf Silanbasis für die Vorbehandlung sind bevorzugt Silanverbindungen der allgemeinen Formel (I)

(X-(CH₂)_{q})ₖ-Si-(O-CᵣH₂ᵣ₊₁)₄₋ₖ (I)

worin
- X: für NH₂-, HO- oder 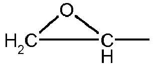 steht,
- q: für eine ganze Zahl von 2 bis 10, bevorzugt 3 bis 4 steht,
- r: für eine ganze Zahl von 1 bis 5, bevorzugt 1 bis 2 steht und
- k: für eine ganze Zahl von 1 bis 3, bevorzugt 1 steht.

Bevorzugte Haftvermittler sind Silanverbindungen aus der Gruppe Aminopropyltrimethoxysilan, Aminobutyltrimethoxysilan, Aminopropyltriethoxysilan, Aminobutyltriethoxysilan sowie die entsprechenden Silane, welche als Substituent X eine Glycidylgruppe enthalten.

Für die Ausrüstung der Füllstoffe werden die Silanverbindungen im Allgemeinen in Mengen von 0,05 bis 2 Gew.-%, vorzugsweise 0,25 bis 1,5 Gew.-% und insbesondere 0,5 bis 1 Gew.-% bezogen auf den mineralischen Füllstoff zur Oberflächenbeschichtung eingesetzt.

Die teilchenförmigen Füllstoffe können bedingt durch die Verarbeitung zur Formmasse bzw. Formkörper in der Formmasse bzw. im Formkörper einen kleineren d97- bzw. d50-Wert aufweisen, als die ursprünglich eingesetzten Füllstoffe. Die Glasfasern können bedingt durch die Verarbeitung zur Formmasse bzw. Formkörper in der Formmasse bzw. im Formkörper kürzere Längenverteilungen als ursprünglich eingesetzt aufweisen.

In einer bevorzugten Ausführungsform können die erfindungsgemäßen Formmassen zusätzlich zu den Komponenten A) Polyamid, B) Polymerisat des Propylens, C) Verträglichkeitsvermittler, D) Leitfähigkeitsadditiv und gegebenenfalls E) Füll- oder Verstärkungsstoff oder anstelle von E) noch zusätzlich eine oder mehrere der Komponenten der Reihe F) Flammschutzadditiv, G) Elastomermodifikator, H) übliche Additive oder I) anderweitige Verträglichkeitsvermittler enthalten.

In einer solchen bevorzugten Ausführungsform können also zusätzlich zu den Komponenten A), B), C), D) und E) oder anstelle von E) noch gegebenenfalls
F) 0,001 bis 65 Gew.-% mindestens eines Flammschutzadditivs in den erfindungsgemäßen Polyamid-Formmassen enthalten sein.

Als Flammschutzadditive der Komponente F) werden bevorzugt handelsübliche organische Halogenverbindungen mit Synergisten oder handelsübliche organische Stickstoffverbindungen oder organisch/anorganische Phosphorverbindungen einzeln oder im Gemisch oder mineralische Flammschutzadditive, bevorzugt Magnesiumhydroxid oder Ca-Mg-Carbonat-Hydrate (z.B. DE-A 4 236 122(= CA 210 9024 A1)) eingesetzt. Ebenso kommen Salze aliphatischer oder aromatischer Sulfonsäuren in Frage. Als halogenhaltige Flammschutzadditive, insbesondere bromierte und chlorierte Verbindungen seien bevorzugt Ethylen-1,2-bistetrabromphthalimid, epoxidiertes Tetrabrombisphenol A-Harz, Tetrabrombisphenol-A-oligocarbonat, Tetrachlorbisphenol-A-oligocarbonat, Pentabrompolyacrylat, bromiertes Polystyrol und Decabrom-diphenylether genannt. Als organische Phosphorverbindungen sind die Phosphorverbindungen gemäß WO-A 98/17720 (= US 6 538 024) geeignet, bevorzugt. Triphenylphosphat (TPP), Resorcinol-bis-(diphenylphosphat) (RDP) und die daraus abgeleiteten Oligomere sowie Bisphenol-A-bis-diphenylphosphat (BDP) und die daraus abgeleiteten Oligomere, ferner organische oder anorganische Phosphonsäurederivate und deren Salze, organische oder anorganische Phosphinsäurederivate und deren Salze, insbesondere Metalldialkylphosphinate wie z.B. Aluminium-tris[dialkylphosphinate] oder Zink-bis[dialkylphosphinate], außerdem roter Phospshor, Phosphite, Hypophosphite, Phospinoxide, Phosphazene, Melaminpyrophosphat und deren Mischungen einsetzbar. Als Stickstoffverbindungen werden bevorzugt solche aus der Gruppe der Allantoin-, Cyanursäsure-, Dicyandiamid, Glycouril-, Guanidin-, Ammonium- und Melaminderivate, besonders bevorzugt Allantoin, Benzoguanamin, Glykouril, Melamin, Kondensationsprodukte des Melamins z.B. Melem oder Melom bzw. höher kondensierte Verbindungen dieses Typs und Addukte des Melamins mit Säuren wie z.B. mit Cyanursäure (Melamincyanurat), Phosphorsäure (Melaminphosphat) oder kondensierten Phosphorsäuren (z.B. Melaminpolyphosphat) eingesetzt. Als Synergisten sind bevorzugt Antimonverbindungen, insbesondere Antimontrioxid, Natriumantimonat und Antimonpentoxid, Zinkverbindungen, bevorzugt Zinkborat, Zinkoxid, Zinkphosphat und Zinksulfid, Zinnverbindungen, bevorzugt Zinnstannat oder Zinnborat sowie Magnesiumverbindungen, bevorzugt Magnesiumoxid, Magnesiumcarbonat oder Magnesiumborat geeignet. Auch können dem Flammschutzmittel sogenannte Kohlenstoffbildner, bevorzugt Phenol-Formaldehydharze, Polycarbonate, Polyphenylether, Polyimide, Polysulfone, Polyethersulfone, Polyphenylosulfide oder Polyetherketone sowie Anti-tropfmittel wie Tetrafluorethylenpolymerisate zugesetzt werden.

In einer weiteren alternativen bevorzugten Ausführungsform können die Polyamid-Formmassen zusätzlich zu den Komponenten A), B), C), D), gegebenenfalls E) und/oder F) oder anstelle von E) oder F) noch
G) 0,001 bis 80 Gew.-%, besonders bevorzugt 2 bis 25 Gew.-Teile mindestens eines Elastomermodifikators enthalten.

Die als Komponente G) einzusetzenden Elastomermodifikatoren umfassen ein oder mehrere Pfropfpolymerisate von
G.1 5 bis 95 Gew.-%, vorzugsweise 30 bis 90 Gew.-%, wenigstens eines Vinylmonomeren auf
G.2 95 bis 5 Gew.-%, vorzugsweise 70 bis 10 Gew.-% einer oder mehrerer Pfropfgrundlagen mit Glasübergangstemperaturen < 10°C, vorzugsweise < 0°C, besonders bevorzugt < -20°C.

Die Pfropfgrundlage G.2 hat im Allgemeinen eine mittlere Teilchengröße (d₅₀-Wert) von 0,05 bis 10 µm, vorzugsweise 0,1 bis 5 µm, besonders bevorzugt 0,2 bis 1 µm.

Monomere G.1 sind vorzugsweise Gemische aus
G.1.1 50 bis 99 Gew.-% Vinylaromaten und/oder kernsubstituierten Vinylaromaten (wie beispielsweise Styrol, α-Methylstyrol, p-Methylstyrol, p-Chlorstyrol) und/oder Methacrylsäure-(C₁-C₈)-Alkylester (wie z.B. Methylmethacrylat, Ethylmethacrylat) und
G.1.2 1 bis 50 Gew.-% Vinylcyanide (ungesättigte Nitrile wie Acrylnitril und Methacrylnitril) und/oder (Meth)Acrylsäure-(C₁-C₈)-Alkylester (wie z.B. Methylmethacrylat, n-Butylacrylat, t-Butylacrylat) und/oder Derivate (wie Anhydride und Imide) ungesättigter Carbonsäuren (beispielsweise Maleinsäureanhydrid und N-Phenyl-Maleinimid).

Bevorzugte Monomere G.1.1 sind ausgewählt aus mindestens einem der Monomere Styrol, α-Methylstyrol oder Methylmethacrylat, bevorzugte Monomere G.1.2 sind ausgewählt aus mindestens einem der Monomere Acrylnitril, Maleinsäureanhydrid oder Methylmethacrylat.

Besonders bevorzugte Monomere sind G.1.1 Styrol und G.1.2 Acrylnitril.

Für die in den Elastomermodifikatoren G) einzusetzenden Pfropfpolymerisate geeignete Pfropfgrundlagen G.2 sind bevorzugt Dienkautschuke, EP(D)M-Kautschuke, also solche auf Basis Ethylen/Propylen und gegebenenfalls Dien, Acrylat-, Polyurethan-, Silikon-, Chloropren und Ethylen/Vinylacetat-Kautschuke.

Bevorzugte Pfropfgrundlagen G.2 sind Dienkautschuke (z.B. auf Basis Butadien, Isopren etc.) oder Gemische von Dienkautschuken oder Copolymerisate von Dienkautschuken oder deren Gemischen mit weiteren copolymerisierbaren Monomeren (z.B. gemäß E.1.1 und E.1.2), mit der Maßgabe, dass die Glasübergangstemperatur der Komponente G.2 unterhalb <10°C, vorzugsweise <0°C, besonders bevorzugt <-10°C liegt.

Besonders bevorzugte Propfgrundlagen G.2 sind z.B. ABS-Polymerisate (Emulsions-, Masse- und Suspensions-ABS), wie sie z. B. in der DE-A 2 035 390 (=US-A 3 644 574) oder in der DE-A 2 248 242 (=GB-A 1 409 275) bzw. in Ullmann, Enzyklopädie der Technischen Chemie, Bd. 19 (1980), S. 280-295 beschrieben sind. Der Gelanteil der Pfropfgrundlage E.2 beträgt mindestens 30 Gew.-%, vorzugsweise mindestens 40 Gew.-% (in Toluol gemessen).

Die Elastomermodifikatoren bzw. Pfropfpolymerisate G) werden durch radikalische Polymerisation, z.B. durch Emulsions-, Suspensions-, Lösungs- oder Massepolymerisation, vorzugsweise durch Emulsions- oder Massepolymerisation hergestellt.

Besonders geeignete Pfropfkautschuke sind auch ABS-Polymerisate, die durch Redox-Initiierung mit einem Initiatorsystem aus organischem Hydroperoxid und Ascorbinsäure gemäß US-A 4 937 285 hergestellt werden.

Da bei der Pfropfreaktion die Pfropfmonomeren bekanntlich nicht unbedingt vollständig auf die Pfropfgrundlage aufgepfropft werden, werden erfindungsgemäß unter Pfropfpolymerisaten auch solche Produkte verstanden, die durch (Co)Polymerisation der Pfropfmonomere in Gegenwart der Pfropfgrundlage gewonnen werden und bei der Aufarbeitung mit anfallen.

Geeignete Acrylatkautschuke basieren auf Pfropfgrundlagen G2, die vorzugsweise Polymerisate aus Acrylsäurealkylestern, gegebenenfalls mit bis zu 40 Gew.-%, bezogen auf G.2 anderen polymerisierbaren, ethylenisch ungesättigten Monomeren. Zu den bevorzugten polymerisierbaren Acrylsäureestern gehören C₁-C₈-Alkylester, beispielsweise Methyl-, Ethyl-, Butyl-, n-Octyl- und 2-Ethylhexylester; Halogenalkylester, vorzugsweise Halogen-C₁-C₈-alkyl-ester, wie Chlorethylacrylat sowie Mischungen dieser Monomeren.

Zur Vernetzung können Monomere mit mehr als einer polymerisierbaren Doppelbindung copolymerisiert werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie z.B. Ethylenglykoldimethacrylat, Allylmethacrylat; mehrfach ungesättigte heterocyclische Verbindungen, wie z.B. Trivinyl- und Triallylcyanurat; polyfunktionelle Vinylverbindungen, wie Di- und Trivinylbenzole; aber auch Triallylphosphat und Diallylphthalat.

Bevorzugte vernetzende Monomere sind Allylmethacrylat, Ethylenglykoldimethacrylat, Diallylphthalat und heterocyclische Verbindungen, die mindestens 3 ethylenisch ungesättigte Gruppen aufweisen.

Besonders bevorzugte vernetzende Monomere sind die cyclischen Monomere Triallylcyanurat, Triallylisocyanurat, Triacryloylhexahydro-s-triazin, Triallylbenzole. Die Menge der vernetzten Monomere beträgt vorzugsweise 0,02 bis 5, insbesondere 0,05 bis 2 Gew.-%, bezogen auf die Pfropfgrundlage G.2.

Bei cyclischen vernetzenden Monomeren mit mindestens 3 ethylenisch ungesättigten Gruppen ist es vorteilhaft, die Menge auf unter 1 Gew.-% der Pfropfgrundlage G.2 zu beschränken.

Bevorzugte "andere" polymerisierbare, ethylenisch ungesättigte Monomere, die neben den Acrylsäureestern gegebenenfalls zur Herstellung der Pfropfgrundlage G.2 dienen können, sind z.B. Acrylnitril, Styrol, α-Methylstyrol, Acrylamide, Vinyl-C₁-C₆-alkylether, Methylmethacrylat, Butadien. Bevorzugte Acrylatkautschuke als Pfropfgrundlage G.2 sind Emulsionspolymerisate, die einen Gelgehalt von mindestens 60 Gew.-% aufweisen.

Weitere geeignete Pfropgrundlagen gemäß G.2 sind Silikonkautschuke mit pfropfaktiven Stellen, wie sie in den DE-A 3 704 657 (= US 4 859 740), DE-A 3 704 655 (= US 4 861 831), DE-A 3 631 540 (= US 4 806 593) und DE-A 3 631 539 (= US 4 812 515) beschrieben werden.

Neben Elastomermodifikatoren, die auf Propfpolymeren beruhen, können ebenfalls nicht auf Propfpolymeren basierende Elastomermodifikatoren als Komponente G) eingesetzt werden, die Glasübergangstemperaturen < 10°C, vorzugsweise < 0°C, besonders bevorzugt < -20°C aufweisen. Hierzu können z.B. Elastomere mit einer Blockcopolymerstruktur gehören. Hierzu können weiterhin z.B. thermoplastisch aufschmelzbare Elastomere gehören. Beispielhaft und bevorzugt sind hier EPM-, EPDM- und/oder SEBS-Kautschuke genannt.

In einer weiteren alternativen bevorzugten Ausführungsform können die Polyamid-Formmassen zusätzlich zu den Komponenten A), B), C), D) und gegebenenfalls E) und/oder F) und/oder G) oder anstelle von E), F) und/oder G) noch
H) 0,001 bis 10 Gew.-%, bevorzugt 0,05 bis 3 Gew.-Teile weitere übliche Additive enthalten.

Übliche Additive im Sinne der vorliegenden Erfindung sind bevorzugt Stabilisatoren, insbesondere UV-Stabilisatoren, Thermostabilisatoren, Gammastrahlenstabilisatoren, Antistatika, Fließhilfsmittel, Entformungsmittel, Brandschutzadditive, Emulgatoren, Nukleierungsmittel, Weichmacher, Gleitmittel, Farbmittel, Farbstoffe und Pigmente und Additive zur Erhöhung der elektrischen Leitfähigkeit. Die genannten und weitere geeignete Additive sind zum Beispiel beschrieben in Gächter, Müller, Kunststoff-Additive, 3. Ausgabe, Hanser-Verlag, München, Wien, 1989 und im Plastics Additives Handbook, 5th Edition, Hanser-Verlag, München, 2001. Die Additive können alleine oder in Mischung bzw. in Form von Masterbatchen eingesetzt werden.

Als Stabilisatoren werden bevorzugt sterisch gehinderte Phenole und/oder Phosphite, Hydrochinone, aromatische sekundäre Amine wie Diphenylamine, substituierte Resorcine, Salicylate, Benzotriazole oder Benzophenone, sowie verschieden substituierte Vertreter dieser Gruppen und deren Mischungen eingesetzt. Ebenfalls bevorzugt werden Kupferverbindungen, insbesondere Gemische aus Kupferhalogeniden und Halogenverbindungen und/oder hypophosphoriger Säure oder eines Alkali- oder Erdalkalisalzes dieser Säure. Als Halogenverbindungen werden bevorzugt Alkalihalogenide eingesetzt.

Als Farbmittel eignen sich beispielsweise Farbstoffe vom Pyrazolon-, Perinon- oder Anthrachinontyp, weiterhin vom Methin-, Azo- oder Cumarin-Typ und/oder metallhaltigen Pigmenten, wie anorganischen Pigmenten und die Metallkomplexe von Azo-, Azomethin- oder Methinfarbstoffen, Azomethin-, Chinacridon-, Dioxazin-, Isoindolin-, Isoindolinon-, Perylen-, Phthalocyanin-, Pyrrolopyrrol- oder Thioindigo-Farbmitteln oder Wismut-Vanadat.

Als anorganische Pigmente eignen sich beispielsweise Antimontrioxid, Antimonpentoxid, basisches Bleicarbonat, basisches Bleisulfat oder Bleisilikat, Lithopone, Titandioxid (Anatas, Rutil), Zinkoxid, Zinksulfid, Metalloxide wie Berlinerblau, Bleichromat, Bleisulfochromate, Chrom-antimon-titanat, Chromoxide, Eisenoxide, Kobaltblau, Kobaltchromblau, Kobaltnickelgrau, Manganblau, Manganviolett, Molybdatorange, Molybdatrot, Nickel-antimon-titanat, Ultramarinblau, sowie Metallsulfide wie Antimontrisulfid, Cadmiumsulfid, Cadmiumsulfoselenide, Zirkonsilikate, Zirkonvanadiumblau, Zirkonpraseodymgelb.

Als polymerlösliche Farbstoffe eignen sich bevorzugt Dispersionsfarbstoffe, besonders bevorzugt der Anthrachinonreihe, insbesondere Alkylamino-, Amino-, Arylamino-, Cyclohexylamino-, Hydroxy-, Hydroxyamino- oder Phenylmercaptoanthrachinone, sowie Metallkomplexe von Azofarbstoffen, insbesondere 1:2-Chrom- oder Kobaltkomplexe von Monoazofarbstoffen, sowie Fluoreszenzfarbstoffe, insbesondere solche aus der Benzthiazol-, Cumarin-, Oxarin- oder Thiazinreihe.

Als Pigmente bzw. Farbstoffe werden bevorzugt Titandioxid, Ultramarinblau, Eisenoxid, Ruß, Phthalocyanine, Chinacridone, Perylene, Nigrosin und Anthrachinone eingesetzt.

Als Nukleierungsmittel werden bevorzugt Natrium- oder Calciumphenylphosphinat, Aluminiumoxid, Siliziumdioxid sowie besonders bevorzugt Talkum eingesetzt.

Als Gleit- und Entformungsmittel werden bevorzugt Esterwachse, Pentaeritrytoltetrastearat (PETS), langkettige Fettsäuren (z.B. Stearinsäure oder Behensäure) und Ester, deren Salze (z.B. Ca- oder Zn-Stearat) sowie Amidderivate (z.B. Ethylen-bis-stearylamid) oder Montanwachse (Ester von di- oder mehrfunktionellen Alkohlen mit geradkettigen, gesättigten Carbonsäuren mit Kettenlängen von 28 bis 32 C-Atomen) sowie niedermolekulare Polyethylen- bzw. Polypropylenwachse eingesetzt. Unter Polypropylenwachsen werden hier in Abgrenzung zu Komponente B) Materialien mit niedrigen mittleren Polymerisationsgraden oder Kettenlängen verstanden, die typischerweise zu sehr niedrigen Schmelzviskositäten von unter 50.000 mPa s bei 170 °C führen. Bevorzugt handelt es sich dabei um Polypropylenwachse mit einer Schmelzviskosität bei 170°C von 10 bis 50 000 mPas, besonders bevorzugt von 50 bis 30 000 mPas, insbesondere bevorzugt von 100 bis 10 000 mPas.

Als Weichmacher werden bevorzugt Phthalsäuredioctylester, Phthalsäuredibenzylester, Phthalsäurebutylbenzylester, Kohlenwasserstofföle, N-(n-Butyl)benzolsulfonamid eingesetzt.

Als Additive zur Erhöhung der elektrischen Leitfähigkeit werden bevorzugt Ruße, Leitfähigkeitsruße, Graphit, Graphen, nanoskaliger Graphit, leitfähige Polymere, Metallfasern, niedrig schmelzende Metalllegierungen sowie andere übliche Additive zur Erhöhung der elektrischen Leitfähigkeit zugesetzt. Nanoskalig im Sinne der vorliegenden Erfindung bedeutet, dass die Mehrzahl der Teilchen nach Einarbeitung in die Polymermatrix eine Kantenlänge von < 1µm aufweist.

In einer weiteren alternativen bevorzugten Ausführungsform können die Polyamid-Formmassen zusätzlich zu den Komponenten A), B), C), D), und gegebenenfalls E) und/oder F), und/oder G), und/oder H) und/oder anstelle von E), F), G) oder H) noch gegebenenfalls
I) 0,5 bis 30 Gew.-%, bevorzugt 1 bis 20 Gew.-%, besonders bevorzugt 2 bis 10 Gew.-% und höchst bevorzugt 3 bis 7 Gew.-% anderweitige Verträglichkeitsvermittler (Compatibilizer / Kompatibilisator) enthalten.

Als anderweitige Verträglichkeitsvermittler werden vorzugsweise thermoplastische Polymere mit polaren Gruppen eingesetzt.

Erfindungsgemäß kommen demgemäß Polymere zum Einsatz, die
I.1 ein vinylaromatisches Monomer,
I.2 wenigstens ein Monomer ausgewählt aus der Gruppe C₂ bis C₁₂-Alkylmethacrylate, C₂ bis C₁₂-Alkylacrylate, Methacrylnitrile und Acrylnitrile und
I.3 α,β-ungesättigte Komponenten enthaltend Dicarbonsäureanhydride enthalten.

Vorzugsweise werden als Komponente I.1, I.2 und I.3 Terpolymere der genannten Monomeren eingesetzt. Demgemäß kommen vorzugsweise Terpolymere von Styrol, Acrylnitril und Maleinsäureanhydrid zum Einsatz. Diese Terpolymere tragen insbesondere zur Verbesserung der mechanischen Eigenschaften, wie Zugfestigkeit und Reißdehnung bei. Die Menge an Maleinsäureanhydrid in dem Terpolymer kann in weiten Grenzen schwanken. Vorzugsweise beträgt die Menge 0,2 bis 5 Mol-%. Besonders bevorzugt sind Mengen zwischen 0,5 und 1,5 Mol-%. In diesem Bereich werden besonders gute mechanische Eigenschaften bezüglich Zugfestigkeit und Reißdehnung erzielt.

Das Terpolymer kann nach bekannter Weise hergestellt werden. Eine geeignete Methode ist das Lösen von Monomerkomponenten des Terpolymers, z. B. des Styrols, Maleinsäureanhydrids oder Acrylnitrils in einem geeigneten Lösemittel, z. B. Methylethylketon (MEK). Zu dieser Lösung werden ein oder gegebenenfalls mehrere chemische Initiatoren hinzugesetzt. Geeignete Initiatoren sind z.B. Peroxide. Sodann wird das Gemisch für mehrere Stunden bei erhöhten Temperaturen polymerisiert. Anschließend werden das Lösemittel und die nicht umgesetzten Monomere in an sich bekannter Weise entfernt.

Das Verhältnis zwischen der Komponente I.1 (vinylaromatisches Monomer) und der Komponente I.2, z.B. dem Acrylnitrilmonomer in dem Terpolymer liegt vorzugsweise zwischen 80:20 und 50:50.

Als vinylaromatisches Monomer I.1 ist Styrol besonders bevorzugt.

Für die Komponente I.2 ist besonders bevorzugt Acrylnitril geeignet.

Als Komponente I.3 ist besonders bevorzugt Maleinsäureanhydrid geeignet.

Beispiele für erfindungsgemäß einsetzbare anderweitige Verträglichkeitsvermittler I) sind in den EP-A 0 785 234 (= US 5 756 576) und EP-A 0 202 214 (= US 4 713 415) beschrieben. Erfindungsgemäß bevorzugt sind insbesondere die in der EP-A 0 785 234 genannten Polymere.

Die Verträglichkeitsvermittler können in Komponente I) allein oder in beliebiger Mischung untereinander enthalten sein.

Polyamidformmassen, dadurch gekennzeichnet, dass diese wenigstens die Komponenten A), B), C) und D) enthalten.

In einer anderen bevorzugten Ausführungform handelt es sich um ein Verfahren zur Reduktion der Abhängigkeit der elektrischen Leitfähigkeit von der Wasseraufnahme von Polyamidformmassen auf Basis der Komponenten A), B), C) und D), wobei D) für Carbon Nanotubes steht.

In einer weiteren bevorzugten Ausführungsform handelt es sich um ein Verfahren zur Reduktion der Abhängigkeit der elektrischen Leitfähigkeit von der Wasseraufnahme von Polyamidformmassen unter Einsatz von 20-94,9 Gew.-% Polyamid, 2-40 Gew.-% eines Polymerisats des Propylens und 0,1-10 Gew.-% eines Verträglichkeitsvermittlers aus der Reihe der Propfcopoylmerisate des Propylens und 0,01-30 Gew.-% Carbon Nanotubes. Erfindungsgemäß ist unter diesen Gew.-% der die Abhängigkeit der elektrischen Leitfähigkeit von der Wasseraufnahme von Polyamidformmassen reduzierende Gehalt an Polymerisat des Propylens bzw. Verträglichkeitsvermittler aus der Reihe der Propfcopolymerisate des Propylens zu verstehen.

Die vorliegende Erfindung betrifft ferner die Verwendung mindestens eines Polymerisats des Propylens und mindest eines Verträglichkeitsvermittlers aus der Reihe der Propfcopolymerisate des Propylens zur Reduktion des Einflusses der Wasseraufnahme auf die elektrische Leitfähigkeit von Polyamid-Formmassen, die als Leitfähigkeitsadditiv Carbon Nanotubes enthalten.

In einer bevorzugten Verwendungsform wird als thermoplastisches Polyamid ein teilkristallines Polyamid eingesetzt.

In einer weiteren bevorzugten Ausführungsform betrifft die vorliegende Erfindung ein Verfahren zur Reduktion der Abhängigkeit der elektrischen Leitfähigkeit von der Wasseraufnahme von Leitfähigkeitsadditiv enthaltenden Formmassen die zusätzlich zu den Komponenten A), B), C) und D) eine oder mehrere Komponenten der Reihe
E) 0,1 bis 70 Gew.-% mindestens eines Füll- oder Verstärkungsstoffes
F) 0,001 bis 65 Gew.-% mindestens eines Flammschutzadditivs
G) 0,001 bis 80 Gew.-% mindestens eines Elastomermodifikators

Die vorliegende Erfindung betrifft ferner die Verwendung mindestens eines Polymerisats des Propylens und mindest eines Verträglichkeitsvermittlers aus der Reihe der Propfcopolymerisate des Propylens zur Reduktion des Einflusses der Wasseraufnahme auf die elektrische Leitfähigkeit von Polyamid-Formmassen, die ein Leitfähigkeitsadditiv aus der Reihe der Kohlenstofffasern oder Carbon Nanotubes enthalten.

In einer bevorzugten Verwendungsform wird als thermoplastisches Polyamid ein teilkristallines Polyamid eingesetzt.

In einer weiteren bevorzugten Ausführungsform betrifft die vorliegende Erfindung ein Verfahren zur Reduktion der Abhängigkeit der elektrischen Leitfähigkeit von der Wasseraufnahme von Leitfähigkeitsadditiv enthaltenden Formmassen die zusätzlich zu den Komponenten A), B), C) und D) eine oder mehrere Komponenten der Reihe
E) 0,1 bis 70 Gew.-% mindestens eines Füll- oder Verstärkungsstoffes
F) 0,001 bis 65 Gew.-% mindestens eines Flammschutzadditivs
G) 0,001 bis 80 Gew.-% mindestens eines Elastomermodifikators
H) 0,001 bis 10 Gew.-% weitere übliche Additive
I) 0,5 bis 30 Gew.-% anderweitige Verträglichkeitsvermittler
enthalten.

Diese Formmassen erhält man nach bekannten Verfahren durch Vermischen der oben aufgeführten Komponenten in den entsprechenden Gewichtsanteilen. Vorzugsweise geschieht das Mischen der Komponenten bei Temperaturen von 220 bis 330°C durch gemeinsames Vermengen, Vermischen, Kneten, Extrudieren oder Verwalzen der Komponenten. Es kann vorteilhaft sein, einzelne Komponenten vorzumischen. Es kann weiterhin vorteilhaft sein, Formteile oder Halbzeuge aus einer bei Raumtemperatur (bevorzugt 0 bis 40°C) hergestellten physikalischen Mischung (Dryblend) vorgemischter Komponenten und/oder einzelner Komponenten direkt herzustellen.

Die erfindungsgemäßen Polyamid-Formmassen zeichnen sich gegenüber Formmassen aus Polyamid und elektrischem Leitfähigkeitsadditiv ohne Polymerisat des Propylens und Verträglichkeitsvermittler aus der Reihe der Propfcopolymerisate des Propylens durch eine vergleichbare oder sogar verbesserte Fließfähigkeit aus.

Die aus den erfindungsgemäß eingesetzten Polyamid-Formmassen hergestellten Formteile, Formkörper oder Halbzeuge zeichnen sich durch eine reduzierte Wasseraufnahme und eine reduzierte Abhängigkeit der elektrischen Leitfähigkeit von der Wasseraufnahme aus, gegenüber Formteilen, Formkörpern oder Halbzeugen, die aus elektrisches Leitfähigkeitsadditiv enthaltenden Polyamidformmassen ohne Zusatz von Polymerisaten des Propylens und Verträglichkeitsvermittler aus der Reihe der Propfcopolymerisate des Propylens hergestellt wurden.

Weiterhin zeichnen sich die aus den erfindungsgemäßen Polyamid-Formmassen hergestellten Formteile, Formkörper oder Halbzeuge durch gute mechanische Eigenschaften aus gegenüber Formteilen, Formkörper oder Halbzeugen aus Polyamidformmassen, die ein Polymerisat des Propylens, elektrisches Leitfähigkeitsadditiv aber keinen Verträglichkeitsvermittler aus der Reihe der Propfcopolymersiate des Propylens enthalten.

Die vorliegende Erfindung betrifft deshalb auch Formteile, Formkörper oder Halbzeuge erhältlich durch Spritzguss oder Extrusion der erfindungsgemäßen Polyamid-Formmassen.

Die erfindungsgemäßen Polyamid-Formmassen mit reduziertem Einfluß der Wasseraufnahme auf die elektrische Leitfähigkeit zeigen im Vergleich zu Polyamid-Formmassen ohne Zusatz eines Polymerisats des Propylens und eines Verträglichkeitsvermittlers aus der Reihe der Propfcopolymerisate des Propylens zusätzlich weiterhin folgende Vorteile:
- geringere Dichte
- reduzierte und verlangsamte Wasseraufnahme, die zu einem geringeren Verlust an Steifigkeit und Festigkeit während der Konditionierung von Formteilen führt
- isotroperes Schwindungsverhalten
- verbesserte Hydrolysebeständigkeit
- verbesserte Oberflächenqualität der Formteile

Die erfindungsgemäßen Polyamid-Formmassen mit reduziertem Einfluß der Wasseraufnahme auf die elektrische Leitfähigkeit können außerdem im Vergleich zu Polyamid-Formmassen ohne Zusatz eines Polymerisats des Propylens und eines Verträglichkeitsvermittlers aus der Reihe der Propfcopolymerisate des Propylens eine verbesserte Fließfähigkeit aufweisen, insbesondere bei für die Spritzgussverarbeitung relevanten Scherraten. Dies zeigt sich u.a. auch an reduzierten Fülldrücken.

Die erfindungsgemäßen Polyamid-Formmassen mit reduziertem Einfluß der Wasseraufnahme auf die elektrische Leitfähigkeit zeichnen sich im Vergleich zu Leitruß enthaltenden Polypropylen-Formmassen, die einen Anteil an Polyamid enthalten, durch eine höhere Wärmeformbeständigkeit und die Verwendbarkeit bei hohen Dauergebrauchstemperaturen ggf. auch in Kontakt mit Ölen oder Kraftstoffen aus.

Die erfindungsgemäßen Polyamid-Formmassen können nach üblichen Verfahren, beispielsweise durch Spritzguss oder Extrusion, zu Formteilen oder Halbzeugen verarbeitet werden. Beispiele für Halbzeuge sind Folien und Platten. Besonders bevorzugt ist die Spritzgießverarbeitung.

Die erfindungsgemäß aus den beschriebenen Polyamid-Formmassen herzustellenden Formteile, Formkörper oder Halbzeuge können klein- oder großteilig sein und bevorzugt in der Kraftfahrzeug-, Elektro-, Elektronik-, Telekommunikations-, Informationstechnologie-, Computerindustrie, im Haushalt, Sport, in der Medizin oder der Unterhaltungsindustrie angewandt werden. Insbesondere können die erfindungsgemäßen Polyamid-Formmassen für Anwendungen eingesetzt werden, für die elektrisch ableitende oder leitende Materialien benötigt werden. Bevorzugt sind Anwendungen bei denen eine antistatische Aufladung verhindert werden muss, insbesondere Verpackungen, Dosiersysteme für Aerosole, Pluver oder Flüssigkeiten und Elektronikbauteile wie Chip-Träger, wo aus Sicherheitsgründen die elektrostatische Aufladung verhindert werden muss. Besonders bevorzugt sind Anwendungen in Kontakt mit leicht- und hochentzündlichen Gasen, Pulvern und Flüssigkeiten insbesondere Kraftstoffe, Hydraulikfüßigkeiten oder Öle zu erwähnen. Speziell der Einsatz in Kraftstoff- und Hydraulikfiltergehäusen sowie Filterinnenrohren im Kfz und Maschinenbereich sei hier genannt. Ein weiteres Beispiel für Anwendungen in denen die erfindungsgemäßen Formmassen eingesetzt werden können ist der Bereich Elektromagnetische Abschirmung von elektrischen Geräten und elektronischen Baugruppen, bevorzugt in der Kfz-, E D V-, Nachrichten- und Kommunikationstechnik. Formteile aus den erfindungsgemäßen Polyamid-Formmassen können als Gehäuse, Einhausungen oder einfache Abschirmungen von elektrischen Geräten oder Baugruppen gegen elektromagnetische Wellen eingesetzt werden. Ein weiteres Beispiel für Anwendungen in denen die erfindungsgemäßen Polyamid-Formmassen eingesetzt werden können ist die Nutzung der elektrischen Leitfähigkeit z.B. Potentialsteuerung im Kabel, stromabhängige Schaltelemente, Widerstandsheizungen bzw. Heizelemente oder für die elektrostatische Lackierung von Formteilen.

Bevorzugt werden Formteile mit einem Oberflächenwiderstand kleiner als 10 GOhm, besonders bevorzugt kleiner 10 MOhm, ganz besonders bevorzugt kleiner 10 kOhm verwendet.

Insbesondere betrifft die vorliegende Anmeldung die Verwendung der Formteile, Formkörper oder Halbzeuge in der Elektro-, Elektronik-, Telekommunikations-, Kraftfahrzeug-, Luftfahrt-, Computerindustrie, im Sport, in der Medizin, im Haushalt oder in der Unterhaltungsindustrie oder für Teile des Kraftstoffsystems, Motor- und Getriebeölkreislaufs von Kraftfahrzeugen oder Maschinen oder in der Chipherstellung oder für elektrostatisch lackierbare Teile von Kraftfahrzeugen.

Zur Klarstellung sei angemerkt, dass vom Rahmen der Erfindung alle aufgeführten, allgemein oder in Vorzugsbereichen genannten Definitionen und Parameter in beliebigen Kombinationen umfasst sind.

Beispiele:
- Komponente A1:: Polyamid 6: Durethan® B29, Handelsprodukt der Lanxess Deutschland GmbH, Leverkusen, Deutschland, mit einer relativen Lösungsviskosität von 2,9 (gemessen in m-Kresol bei 25 °C)
- Komponente A2:: Polyamid 66: Radipol® A45, Handelsprodukt der Fa. Radici, Bergamo, Italien, mit einer Lösungsviskosität von 3,0 (gemessen in m-Kresol bei 25 °C)
- Komponente B1:: 1-Propen-Homopolymer: Moplen HP 501L, Handelsprodukt der LyondellBasell Industries, Rotterdam, Niederlande mit einem MFR von 6,0 g/10 min (gemessen bei 230 °C, 2,16 kg nach ISO 1133)
- Komponente C1:: MAH-modifiziertes Homo-Poylpropylen: Bondyram 1001 der Polyram Ram-On Industries, Ram-On, Israel
- Komponente D1:: Kohlenstofffaser auf Basis Polyacrylnitril: Tenax U243 der Toho Tenax Europe GmbH, Wuppertal, Deutschland
- Komponente D2:: Carbon Nanotubes: Baytubes^{®} C150P der Bayer MaterialSciene AG, Leverkusen, Deutschland
- Komponente E1:: Mit silanhaltigen Verbindungen beschlichtete Glasfaser mit einem Durchmesser von 11 µm (CS 7928, Handelsprodukt der Lanxess Antwerpen N.V., Antwerpen, Belgien)
- Komponente H1:: Als weitere Additive wurden die folgenden, für die Verwendung in thermoplastischen Polyamiden gebräuchlichen Komponenten eingesetzt:
- Nukleierungsmittel:: Talkum [CAS-Nr. 14807-96-6] in Mengen von 0,01 bis 1 Gew.-%.
- Ruß:: Plasblak®UN2014 von Cabot Plastics Deutschland von 0,01 bis 1 Gew.-%.
- Entformungsmittel:: Ethylenglykoldimontanat [CAS-Nr. 74388-22-0], in Mengen von 0,02 bis 1 Gew.-%.
- Thermostabilisator:: Thermostabilisator auf Basis von Kupferverbindungen in Mengen von 0,001 bis 0,5 Gew.-%
- Komponente H2:: Als weitere Additive wurden die folgenden, für die Verwendung in thermoplastischen Polyamiden gebräuchlichen Komponenten eingesetzt:
- Entformungsmittel:: Ethylenglykoldimontanat [CAS-Nr. 74388-22-0], in Mengen von 0,02 bis 1 Gew.-%.
- Farbstoff:: Azinfarbstoff [CAS-Nr. 8005-02-5] in Mengen von 0,01 bis 1 Gew.-%.
- Komponente H3:: Als weitere Additive wurden die folgenden, für die Verwendung in thermoplastischen Polyamiden gebräuchlichen Komponenten eingesetzt:
- Entformungsmittel:: Ethylenglykoldimontanat [CAS-Nr. 74388-22-0], in Mengen von 0,02 bis 1 Gew.-%.
- Ruß:: Plasblak®UN2014 von Cabot Plastics Deutschland von 0,01 bis 1 Gew.-%.
- Farbstoff:: Azinfarbstoff [CAS-Nr. 8005-02-5] in Mengen von 0,01 bis 1 Gew.-%.
- Thermostabilisator:: Thermostabilisator auf Basis von Kupferverbindungen

Die verwendeten weiteren Additive (Komponente H1, H2 und H3) stimmen in Art und Menge jeweils für die Beispiele und zugehörigen Vergleiche überein.

Zusammensetzungen auf Basis von PA6 und PA66 der Beispiele in den Tabellen 1, 2 und 3 wurden auf einem Zweiwellenextruder des Typs ZSK26 (Coperion - Werner und Pfleiderer) bei Massetemperaturen von 260 bis 300°C zu Formmassen compoundiert, die Schmelze wurde in ein Wasserbad ausgetragen und anschließend granuliert.

Die Formmassen der Zusammensetzungen der Beispiele in den Tabellen 1 und 2 wurden auf einer Spritzgießmaschine des Typs ARBURG-520 C 2000 - 350 bei Massetemperaturen von ca. 280°C und einer Werkzeugtemperatur von ca. 80°C zu Prüfkörpern:
- Prüfstäben 80x10x4 mm (gem. ISO 178)
- Schulterstäben (4 mm Dicke gemäß ISO 527)
- Musterplatten 60x40x4 mm
verspritzt.

Die Formmassen der Zusammensetzungen der Beispiele in Tabelle 3 wurden auf einer Spritzgießmaschine des Typs ARBURG-520 C 2000 - 350 bei Massetemperaturen von ca. 290°C und einer Werkzeugtemperatur von ca. 80°C zu Prüfkörpern:
- Prüfstäben 80x10x4 mm (gem. ISO 178)
- Schulterstäben (4 mm Dicke gemäß ISO 527)
- Musterplatten 60x40x4 mm
verspritzt.

Bis auf die Schmelzeviskositätsmessung und die Bestimmung der Fließspirallänge wurden alle in den Tabellen 1, 2 und 3 aufgeführten Untersuchungen an o.g. Prüfkörpern durchgeführt:
Zugversuch zur Ermittlung von Zugmodul, Zugfestigkeit und Bruchdehnung nach DIN EN ISO 527-2/1A
Biegeversuch zur Ermittlung von Biegemodul, Biegefestigkeit und Randfaserdehnung nach DIN EN ISO 178

Schlagzähigkeit: IZOD-Methode nach ISO 180/1U bei Raumtemperatur

Dichte: Bestimmt nach ISO 1183 Verfahren A an Prüfstäben 80x10x4 mm.

Wasseraufnahme: Die Wasseraufnahme wurde an den 60x40x4 mm Musterplatten gravimetrisch bestimmt. Dazu wurden die Musterplatten bei Raumtemperatur in Wasser eingelagert und in regelmäßigen Abständen die Gewichtszunahme bestimmt.

Elektrischer Widerstand: Da die elektrische Leitfähigkeit dem elektrischen Widerstand umgekehrt proportional ist und der elektrische Widerstand relativ einfach bestimmt werden kann, wurde der elektrische Widerstand als Maß für die elektrische Leitfähigkeit des Materials gemessen. Dabei bedeutet ein hoher elektrischer Widerstand eine niedrige elektrische Leitfähigkeit und ein niedriger elektrischer Widerstand eine hohe Leitfähigkeit. Zur Messung des elektrischen Widerstands wurden auf den 40 mm breiten Enden inklusive der Stirnseiten der 60x40x4 mm Musterplatten Silberelektroden von 5 mm Breite und einem Abstand von 50 mm mit Hilfe von Silberleitlack (Leitsilber 200, Fa. Demetron, Hanau, Deutschland) aufgepinselt. Nach einer Verweilzeit von mindestens 10 Minuten wurde der elektrische Widerstand mit Hilfe eines Multimeters des Typs Escort 3145A bestimmt. Der angegebene Wert für den elektrischen Widerstand ist der Mittelwert aus Messungen an drei Musterplatten. Für die Bestimmung des elektrischen Widerstands nach Wasserlagerung wurden Musterplatten bei Raumtemperatur in Wasser gelagert und nach Entnahme und Abtrocknung von anhaftendem Wasser der elektrische Widerstand wie beschrieben bestimmt.

Schmelzeviskosität: Bestimmt nach DIN 54811 / ISO 11443 bei 280°C bzw. 290 °C und einer Scherrate von 1500s⁻¹ mit dem Gerät Rosand RH7 der Fa. Malvern nach Trocknung des Granulates bei 80°C für 48 Stunden im Vakuumtrockner.

Fließspirallänge: Zur Ermittlung der Fließfähigkeit wurde auf einer Spritzgussmaschine eine flache Fließspirale mit einem 8 mm breiten und 2mm hohen Querschnitt gespritzt und der erreichte Fließweg in cm ermittelt. Die Herstellung erfolgte mit einer Massetemperatur von 280°C und einer Werkzeugtemperatur von 80°C. Der angegebene Wert ist der Mittelwert aus fünf Bestimmungen der Fließspirallänge.

Die erfindungsgemäßen Polyamid-Formmassen (Bsp. 1 und Bsp. 2) in Tabelle 1 zeigen gegenüber Polyamid-Formmassen ohne Polymerisat des Propylens und Verträglichkeitsvermittler aus der Reihe der Propfcopolymerisate des Propylens mit gleichem Gehalt an Komponente D1) (Vgl. 1 bzw. Vgl.3) kaum eine Abhängigkeit der elektrischen Leitfähigkeit von der Wasseraufnahme und weisen einen niedrigeren Oberflächenwiderstand und vergleichbare mechanische Eigenschaften auf. Im Vergleich zu Polyamid-Formmassen, die ein Polymerisat des Propylens aber keinen Verträglichkeitsvermittler aus der Reihe der Profcopolymerisate des Propylens enthalten (Vgl. 2 bzw. Vgl. 4), zeigen die erfindungsgemäßen Polyamid-Formmasssen eine verbesserte elektrische Leitfähigkeit und verbesserte mechanische Eigenschaften.

**Tabelle 1: PA6-Formmassen mit Kohlenstofffasern**

| | | Vgl. 1 | Vgl. 2 | Bsp. 1 | Vgl. 3 | Vgl. 4 | Bsp. 2 |
|---|---|---|---|---|---|---|---|
| Komponente A1 | [%] | 69,09 | 49,09 | 45,09 | 69,09 | 49,09 | 45,09 |
| Komponente B1 | [%] | - | 20 | 20 | - | 20 | 20 |
| Komponente C1 | [%] | - | - | 4 | - | - | 4 |
| Komponente D1 | [%] | 8 | 8 | 8 | 6 | 6 | 6 |
| Komponente E1 | [%] | 22 | 22 | 22 | 24 | 24 | 24 |
| Komponente H1 | [%] | 0,91 | 0,91 | 0,91 | 0,91 | 0,91 | 0,91 |
| Schmelzeviskosität (280°C, 1500s⁻¹) | [Pas] | 114 | - | 52 | - | - | - |
| Izod-Schlagzähigkeit (ISO 180 1U, RT) | [kJ/m²] | 62 | 44 | 54 | 68 | 47 | 54 |
| Zugmodul | [MPa] | 12307 | 11452 | 11923 | 12277 | 10993 | 11341 |
| Zugfestigkeit | [MPa] | 186 | 126 | 156 | 188 | 123 | 155 |
| Bruchdehnung | [%] | 2,7 | 2,4 | 2,8 | 3,5 | 2,8 | 3,3 |
| Biegemodul | [Mpa] | 11740 | 11265 | 11569 | 11844 | 10669 | 9917 |
| Biegefestigkeit | [Mpa] | 280 | 201 | 242 | 277 | 197 | 230 |
| Randfaserdehnung | [%] | 2,9 | 2,7 | 3,1 | 3,1 | 2,8 | 3,3 |
| Länge der Fließspirale | [cm] | 24,2 | - | 38,7 | - | - | - |
| Dichte | [g/cm³] | 1,33 | 1,24 | 1,24 | 1,33 | 1,25 | 1,24 |
| Elektrischer Widerstand (spritzfrisch) | [Ohm] | 67 | 66 | 42 | 851 | 626 | 616 |

| **24 h Wasserlagerung bei Raumtemperatur** | | | | | | | |
|---|---|---|---|---|---|---|---|
| Wasseraufnahme | % | 0,88 | 0,38 | 0,45 | 0,66 | 0,35 | 0,30 |
| Elektrischer Widerstand | [Ohm] | 504000 | 118 | 78 | 5336 | 793 | 765 |

| **48 h Wasserlagerung bei Raumtemperatur** | | | | | | | |
|---|---|---|---|---|---|---|---|
| Wasseraufnahme | % | 1,19 | 0,61 | 0,61 | 1,05 | 0,57 | 0,46 |
| Elektrischer Widerstand | [Ohm] | 2210000 | 162 | 84 | 3050000 | 1925 | 902 |

| **96 h Wasserlagerung bei Raumtemperatur** | | | | | | | |
|---|---|---|---|---|---|---|---|
| Wasseraufnahme | % | 1,67 | 0,89 | 0,88 | 1,48 | 0,87 | 0,69 |
| Elektrischer Widerstand | [Ohm] | 2210000 | 321 | 88 | 3900000 | 3330 | 1124 |

| **168 h Wasserlagerung bei Raumtemperatur** | | | | | | | |
|---|---|---|---|---|---|---|---|
| Wasseraufnahme | % | 2,05 | 1,22 | 1,1 | 1,87 | 1,16 | 0,90 |
| Elektrischer Widerstand | [Ohm] | 3200000 | 248 | 101 | 4200000 | 6830 | 1306 |

| **336 h Wasserlagerung bei Raumtemperatur** | | | | | | | |
|---|---|---|---|---|---|---|---|
| Wasseraufnahme | % | 2,74 | 1,93 | 1,51 | 2,70 | 1,79 | 1,31 |
| Elektrischer Widerstand | [Ohm] | 2320000 | 391 | 96 | 2850000 | 5923 | 1599 |

| **504 h Wasserlagerung bei Raumtemperatur** | | | | | | | |
|---|---|---|---|---|---|---|---|
| | | Vgl. 1 | Vgl. 2 | Bsp. 1 | Vgl. 3 | Vgl. 4 | Bsp. 2 |
| Wasseraufnahme | % | 3,25 | 2,53 | 1,81 | 3,27 | 2,31 | 1,66 |
| Elektrischer Widerstand | [Ohm] | 4820000 | 410 | 98 | 4570000 | 8823 | 1423 |

Die erfindungsgemäße Polyamid-Formmasse (Bsp. 3) in Tabelle 2 zeigt gegenüber Polyamid-Formmassen ohne Polymerisat des Propylens und Verträglichkeitsvermittler aus der Reihe der Propfcopolymerisate des Propylens mit gleichem Gehalt an Komponente D2) (Vgl. 5) kaum eine Abhängigkeit der elektrischen Leitfähigkeit von der Wasseraufnahme und weist einen niedrigeren Oberflächenwiderstand auf.

**Tabelle 2: PA6-Formmassen mit Carbon Nanotubes**

| | | Vgl. 5 | Bsp. 3 |
|---|---|---|---|
| Komponente A1 | [%] | 66,24 | 42,24 |
| Komponente B1 | [%] | - | 20 |
| Komponente C1 | [%] | - | 4 |
| Komponente D2 | [%] | 3,5 | 3,5 |
| Komponente E1 | [%] | 30 | 30 |
| Komponente H2 | [%] | 0,26 | 0,26 |
| Schmelzeviskosität (280°C, 1500s⁻¹) | [Pas] | 111 | 44 |
| Elektrischer Widerstand (spritzfrisch) | [Ohm] | 220000 | 4300 |

| **24 h Wasserlagerung bei Raumtemperatur** | | | |
|---|---|---|---|
| Wasseraufnahme | % | 0,74 | 0,28 |
| Elektrischer Widerstand | [Ohm] | 1000000 | 15000 |

| **48 h Wasserlagerung bei Raumtemperatur** | | | |
|---|---|---|---|
| Wasseraufnahme | % | 1,00 | 0,37 |
| Elektrischer Widerstand | [Ohm] | 1600000 | 16000 |

| **96 h Wasserlagerung bei Raumtemperatur** | | | |
|---|---|---|---|
| Wasseraufnahme | % | 1,39 | 0,51 |
| Elektrischer Widerstand | [Ohm] | 880000 | 17300 |

Die erfindungsgemäße Polyamid-Formmasse (Bsp. 4) in Tabelle 3 zeigt gegenüber Polyamid-Formmassen ohne Polymerisat des Propylens und Verträglichkeitsvermittler aus der Reihe der Propfcopolymerisate des Propylens mit gleichem Gehalt an Komponente D1) (Vgl. 6) eine reduzierte Abhängigkeit der elektrischen Leitfähigkeit von der Wasseraufnahme und weist einen niedrigeren Oberflächenwiderstand auf.

**Tabelle 3: PA66-Formmassen mit Kohlenstofffasern**

| | | Vgl. 6 | Bsp. 4 |
|---|---|---|---|
| Komponente A2 | [%] | 69,24 | 45,24 |
| Komponente B1 | [%] | - | 20 |
| Komponente C1 | [%] | - | 4 |
| Komponente D1 | [%] | 8 | 8 |
| Komponente E1 | [%] | 22 | 22 |
| Komponente H3 | [%] | 0,76 | 0,76 |
| Schmelzeviskosität (290°C, 1500s⁻¹) | [Pas] | 169 | 99 |
| Izod-Schlagzähigkeit (ISO 180 1U, RT) | [kJ/m²] | 55 | 47 |
| Zugmodul | [MPa] | 13130 | 12354 |
| Zugfestigkeit | [MPa] | 186 | 160 |
| Bruchdehnung | [%] | 2,4 | 2,4 |
| Biegemodul | [Mpa] | 11596 | 11047 |
| Biegefestigkeit | [Mpa] | 273 | 240 |
| Randfaserdehnung | [%] | 2,8 | 3,0 |
| Dichte | [g/cm³] | 1,33 | 1,24 |
| Elektrischer Widerstand (spritzfrisch) | [Ohm] | 68 | 63 |

| **24 h Wasserlagerung bei Raumtemperatur** | | | |
|---|---|---|---|
| Wasseraufnahme | % | 0,50 | 0,19 |
| Elektrischer Widerstand | [Ohm] | 1712 | 91 |

| **48 h Wasserlagerung bei Raumtemperatur** | | | |
|---|---|---|---|
| Wasseraufnahme | % | 0,72 | 0,27 |
| Elektrischer Widerstand | [Ohm] | 4070 | 103 |

| **72 h Wasserlagerung bei Raumtemperatur** | | | |
|---|---|---|---|
| Wasseraufnahme | % | 0,86 | 0,33 |
| Elektrischer Widerstand | [Ohm] | 4827 | 107 |

| **144 h Wasserlagerung bei Raumtemperatur** | | | |
|---|---|---|---|
| Wasseraufnahme | % | 1,19 | 0,50 |
| Elektrischer Widerstand | [Ohm] | 11280 | 134 |

| **168 h Wasserlagerung bei Raumtemperatur** | | | |
|---|---|---|---|
| Wasseraufnahme | % | 1,30 | 0,57 |
| Elektrischer Widerstand | [Ohm] | 30137 | 139 |

## Patentansprüche

1. Polyamid Formmassen enthaltend wenigstens
A) 20-94,9 Gew.-% eines thermoplastischen Polyamids
B) 2-40 Gew.-% wenigstens eines Polymerisats des Propylens,
C) 0,1-10 Gew.-% wenigstens eines Verträglichkeitsvermittlers aus der Reihe der Propfcopolymere des Propylens und
D) 0,01-30 Gew.-% Carbon Nanotubes.

2. Polyamid-Formmassen gemäß Anspruch 1, **dadurch gekennzeichnet, dass** teilkristalline Polyamide eingesetzt werden.

3. Polyamid-Formmassen gemäß Anspruch 2, **dadurch gekennzeichnet, dass** teilkristalline aliphatische Polyamide eingesetzt werden.

4. Polyamid-Formmassen gemäß der Ansprüche 1 bis 3, **dadurch gekennzeichnet, dass** das Polymerisat des Propylens B) ein Propylenhomopolymerisat oder ein Propylencopolymerisat mit bis zu 25 Gew.-% einpolymerisierten weiteren C₂-C₁₀-Alk-1-enen oder ein Propylen-Blockcopolymerisat aus 1,0 bis 99 Gew.% eines Propylenhomopolymerisats und aus 1,0 bis 99 Gew.-% eines Propylencopolymerisats mit 5 bis 70 Gew.-% einpolymerisierter weiterer C₂-C₁₀-Alk-1-ene ist.

5. Polyamid-Formmassen gemäß der Ansprüche 1 bis 4, **dadurch gekennzeichnet, dass** diese neben den Komponenten A) bis D) noch zusätzlich E) 0,1-70 Gew.-% wenigstens eines Füll- oder Verstärkungsstoffes enthalten.

6. Verfahren zur Reduktion der Abhängigkeit der elektrischen Leitfähigkeit von der Wasseraufnahme von Leitfähigkeitsadditiv enthaltenden Polyamidformmassen, **dadurch gekennzeichnet, dass** diese wenigstens die Komponenten A), B), C) und D) gemäß Anspruch 1 enthalten.

7. Verfahren gemäß Anspruch 6, **dadurch gekennzeichnet, dass** die Polyamid-Formmassen zusätzlich zu den Komponenten A), B), C) und D) noch eine oder mehrere Komponenten der Reihe
E) 0,1 bis 70 Gew.-% mindestens eines Füll- oder Verstärkungsstoffes
F) 0,001 bis 65 Gew.-% mindestens eines Flammschutzadditivs
G) 0,001 bis 80 Gew.-% mindestens eines Elastomermodifikators
H) 0,001 bis 10 Gew.-% weitere übliche Additive
I) 0,5 bis 30 Gew.-% anderweitige Verträglichkeitsvermittler
enthalten.

8. Verwendung der Polyamid-Formmassen gemäß der Ansprüche 1 bis 5 zur Herstellung von Formteilen, Formkörpern oder Halbzeugen mittels Spritzguss oder Extrusion.

9. Formteile, Formkörper der Halbzeuge erhältlich durch Spritzguss oder Extrusion der Polyamid-Formmassen gemäß der Ansprüche 1 bis 5.

10. Verwendung der Formteile, Formkörper oder Halbzeuge gemäß Anspruch 9 in der Elektro-, Elektronik-, Telekommunikations-, Kraftfahrzeug-, Luftfahrt-, Computerindustrie, im Sport, in der Medizin, im Haushalt oder in der Unterhaltungsindustrie oder für Teile des Kraftstoffsystems, Motor- und Getriebeölkreislaufs von Kraftfahrzeugen oder Maschinen oder in der Chipherstellung oder für elektrostatisch lackierbare Teile von Kraftfahrzeugen.

## Claims

1. Polyamide moulding compositions comprising at least
A) from 20 to 94.9% by weight of a thermoplastic polyamide,
B) from 2 to 40% by weight of at least one polymer of propylene,
C) from 0.1 to 10% by weight of at least one compatibilizer from the group of the graft copolymers of propylene and
D) from 0.01 to 30% by weight of carbon nanotubes.

2. Polyamide moulding compositions according to Claim 1, **characterized in that** semicrystalline polyamides are used.

3. Polyamide moulding compositions according to Claim 2, **characterized in that** semicrystalline aliphatic polyamides are used.

4. Polyamide moulding compositions according to Claims 1 to 3, **characterized in that** the polymer of propylene B) is a propylene homopolymer or a propylene copolymer having up to 25% by weight of copolymerized other C₂-C₁₀-alk-1-enes or a propylene block copolymer made of from 1.0 to 99% by weight of a propylene homopolymer and of from 1.0 to 99% by weight of a propylene copolymer having from 5 to 70% by weight of copolymerized other C₂-C₁₀-alk-1-enes.

5. Polyamide moulding compositions according to Claims 1 to 4, **characterized in that** these also comprise E) from 0.1 to 70% by weight of at least one filler or reinforcing material, alongside components A) to D).

6. Method for reducing the dependency of electrical conductivity on the water absorption of polyamide moulding compositions comprising conductivity additive, **characterized in that** these comprise at least components A), B), C) and D) according to Claim 1.

7. Method according to Claim 6, **characterized in that** the polyamide moulding compositions also comprise one or more components from the group of
E) from 0.1 to 70% by weight of at least one filler or reinforcing material
F) from 0.001 to 65% by weight of at least one flame retardant additive
G) from 0.001 to 80% by weight of at least one elastomer modifier
H) from 0.001 to 10% by weight of other conventional additives
I) from 0.5 to 30% by weight of other compatibilizers
in addition to components A), B), C) and D).

8. Use of the polyamide moulding compositions according to Claims 1 to 5 for the production of moulded parts, mouldings or semifinished products by means of injection moulding or extrusion.

9. Moulded parts, mouldings of the semifinished products obtainable via injection moulding or extrusion of the polyamide moulding compositions according to Claims 1 to 5.

10. Use of the moulded parts, mouldings or semifinished products according to Claim 9 in the electrical, electronics, telecommunications, motor-vehicle, airline or computer industry, in sport, in medicine, in domestic use or in the entertainment industry or for parts of the fuel system, engine- and transmission-oil circuit of motor vehicles or machines or in chip production or for motor-vehicle parts that can undergo electrostatic coating.

## Revendications

1. Matériaux de moulage polyamide, contenant au moins :
A) 20 à 94,9 % en poids d'un polyamide thermoplastique,
B) 2 à 40 % en poids d'au moins un polymère de propylène,
C) 0,1 à 10 % en poids d'au moins un agent de compatibilisation de la série des copolymères greffés de propylène et
D) 0,01 à 30 % en poids de nanotubes de carbone.

2. Matériaux de moulage polyamide selon la revendication 1, **caractérisés en ce que** des polyamides partiellement cristallins sont utilisés.

3. Matériaux de moulage polyamide selon la revendication 2, **caractérisés en ce que** des polyamides aliphatiques partiellement cristallins sont utilisés.

4. Matériaux de moulage polyamide selon les revendications 1 à 3, **caractérisés en ce que** le polymère de propylène B) es un homopolymère de propylène ou un copolymère de propylène contenant jusqu'à 25 % en poids d'alc-1-ènes en C₂-C₁₀ copolymérisés supplémentaires ou un copolymère séquencé de propylène constitué de 1,0 à 99 % en poids d'un homopolymère de propylène et 1,0 à 99 % en poids d'un copolymère de propylène contenant 5 à 70 % en poids d'alc-1-ènes en C₂-C₁₀ copolymérisés supplémentaires.

5. Matériaux de moulage polyamide selon les revendications 1 à 4, **caractérisés en ce que** ceux-ci contiennent en plus des composants A) à D) également E) 0,1 à 70 % en poids d'au moins une charge ou matière renforçante.

6. Procédé de réduction de la dépendance à la conductivité électrique de l'absorption d'eau de matériaux de moulage polyamide contenant un additif de conductivité, **caractérisé en ce que** ceux-ci contiennent au moins les composants A), B), C) et D) selon la revendication 1.

7. Procédé selon la revendication 6, **caractérisé en ce que** les matériaux de moulage polyamide contiennent en plus des composants A), B), C) et D) également un ou plusieurs composants de la série suivante :
E) 0,1 à 70 % en poids d'au moins une charge ou matière renforçante,
F) 0,001 à 65 % en poids d'au moins un additif ignifuge,
G) 0,001 à 80 % en poids d'au moins un modificateur élastomère,
H) 0,001 à 10 % en poids d'autres additifs usuels,
I) 0,5 à 30 % en poids d'autres agents de compatibilisation.

8. Utilisation des matériaux de moulage polyamide selon les revendications 1 à 5 pour la fabrication de pièces moulées, de corps moulés ou de produits semi-finis par moulage par injection ou extrusion.

9. Pièces moulées, corps moulés des produits semi-finis pouvant être obtenus par moulage par injection ou extrusion des matériaux de moulage polyamide selon les revendications 1 à 5.

10. Utilisation des pièces moulées, des corps moulés ou des produits semi-finis selon la revendication 9 dans l'industrie électrique, électronique, des télécommunications, automobile, aéronautique, informatique, dans le sport, en médecine, dans le domaine ménager ou dans l'industrie des divertissements ou pour des parties du circuit d'essence, du circuit moteur et d'huile pour engrenage d'automobiles ou de machines, ou dans la fabrication de puces ou pour des pièces vernissables électrostatiquement d'automobiles.
